# EUROPEAN PATENT APPLICATION

(11) **EP 4 000 409 A1**
(43) Date of publication of application: **25.05.2022**
(21) Application number: 20207810.1
(22) Date of filing: 16.11.2020
(51) Int. Cl.: A23J 3/22, A23J 3/26

(54) **MEAT ANALOGUE FOOD PRODUCT**

(71) Applicant: Source Technology ApS, 6000 Kolding (DK)
(72) Inventor: KRINTEL, Kim, 6000 Kolding (DK)
(74) Representative: Patrade A/S

(57) **Abstract**

The present invention concerns methods and systems for providing a meat analogue comprising the steps of (i) providing a meat analogue raw mix; (ii) processing the raw mix from step (i) at process conditions comprising an overpressure of e.g. 1-25 bar and a temperature of e.g. 70-125°C, said process conditions providing a non-meat dough with an exit temperature of e.g. 65-110°C, wherein the raw mix is subjected to a higher pressure at the start than at the end of the processing step (ii); and (iii) cooling the non-meat dough by the use of a cooling means to a temperature at least 10°C below said non-meat dough exit temperature to provide the meat analogue; and optionally (iv) providing smaller pieces of said meat analogue, as such slices, stripes, mints, chunks and/or cubes by cutting using a cutter. Furthermore, the invention pertains to meat analogues provided by such methods and/or systems thereto.

## Description

### Field of the Invention

The present invention relates to food, such as meat analogue food, e.g. vegetarian and/or vegan food, and optionally gluten-free food, such as gluten-free vegan or vegetarian food, as well as methods for providing such food, including devices and systems thereto.

### Background of the Invention

US5433968 concerns a process for producing a simulated meat product from vegetable protein material, particularly soy flour, and water. In particular, a dough-like slurry of soy flour and water is pumped into the gap between a fixed plate and a rapidly rotating plate in a high speed emulsion mill under conditions which rapidly heat the slurry to a temperature above 100°C to rapidly texturize the protein.

WO 16/150834 concerns a process for preparing a meat-analogue food product, where an extruder barrel is fed with water and plant protein, and oil or fat are injected at a downstream location. The extruder barrels are heated to a temperature of 70-180, 80-180, or 80-150 °C. The mixture is extruded through a cooling die downstream of the extruder providing an exit temperature of 40-100, 50-100, 50-95 or 50-90 °C.

WO16/055940 concerns a method for providing products with an appearance and texture of cooked meat comprising extrusion at 110-180 °C, and a pressure of 4.8 to 34.5 bar, followed by gradual cooling and pressure reduction to avoid moisture flashing.

WO 2016/150834 concerns a process for preparing a meat-analogue food product, where an extruder barrel is fed with water and plant protein, and oil or fat are injected at a downstream location. The extruder barrels are heated to a temperature of 70-180, 80-180, or 80-150 °C. The mixture is extruded through a cooling die downstream of the extruder providing an exit temperature of 40-100, 50-100, 50-95 or 50-90 °C.

Plattner (2020) compares three different extrusion technologies, i.e. dry-, wet- and thermal extrusion (also called PowerHeater processing). The PowerHeater technology is thus very different from the conventional dry, high moisture (wet) extrusion techniques.

There is a need for meat analogues with improved product qualities, such as improved organoleptic properties, including texture. Furthermore, there is a need for products with improved processability, such as cutability. In particular there is a need for industrial processes, such as continuous processes, providing such meat analogues with improved qualities.

### Summary of the Invention

It is an object of the invention to provide a meat-analogue food product with improved qualities, such as improved processability and/or organoleptic properties.

It is a further object of the invention to provide a process, such as a continuous process for the provision of a meat-analogue food product, such as meat analogues with such improved qualities.

It is yet another object of the invention to provide a system for providing such meat-analogue food product.

The present inventors have unexpectedly and surprisingly found that a rapid and/or controlled cooling of the non-meat dough provides a non-meat product with improved properties.

In a first aspect, the present invention concerns a method, such as a continuous method, for providing a meat analogue, said method comprising the steps of: (a) providing a meat analogue raw mix; (b) processing the raw mix from step (a) at process conditions comprising: (i) a pressure, such as an overpressure, of 1.0-25 bar; and (ii) a temperature of 70-125°C; wherein said process conditions are adapted to provide a non-meat dough with an exit temperature of 65-110°C; and wherein the raw mix is subjected to a higher pressure at the start than at the end of the processing step (b); (c) cooling the non-meat dough by the use of a cooling means to a temperature at least 5°C below said non-meat dough exit temperature to provide the meat analogue; and optionally, providing smaller pieces of said meat analogue, such as chunks, by e.g. cutting using a cutter.

In a second aspect, the present invention relates to a meat analogue obtained or obtainable by a method according to the first aspect.

In a third aspect, the present invention pertains to a further product comprising 1- 99% of the meat analogue according to the second aspect.

In a fourth aspect, the present invention concerns a system for providing a meat analogue, such as a meat analogue according to the first, second or third aspect, said system comprising:
a) a processing device (20) for processing a meat analogue raw mix to provide a non-meat dough, said processing device comprising:
   i. Propulsion means, such as an auger and/or pressure, to provide defined/controlled movement of the raw mix from an raw mix entry point (21) to a non-meat dough exit point (22);
   ii. Pressure means for subjecting the raw mix to a defined/controlled overpressure, such as of 1-25 bar;
   iii. Heating means for heating the raw mix to a defined/controlled temperature, such as 70-125 °C;
b) and a cooling means, such as a cooling device (30), e.g. a heat exchanger, such as a "cooling pipe", for rapid and /or controlled cooling of the non-meat dough by at least 5 °C to provide the meat analogue; wherein said cooling device is in fluid connection with the food processing device.

In a fifth aspect, the present invention concerns a meat analogue obtained or obtainable by the use of a system according to the fourth aspect, a meat analogue according e.g. the second or third aspect. In a sixth aspect, the present invention relates to the use of a system according to the fourth aspect for providing a meat analogue. In some embodiments, said use may provide a meat analogue according e.g the second or third aspect.

In a seventh aspect, the present invention pertains to a computer program product comprising software code portions configured for, when run in the memory of a computer, executing the method according to the first aspect and/or the system according to the fourth aspect.

### Brief description of the Drawing

**Figure 1A****.** Schematic representation of a system comprising a feeding means (optional), a processing means, a cooling means, and a cutting means (optional).
**Figure 1B****.** Example of a system according to **Fig. 1A****,** wherein the processing is PowerHeater (Source Technology), the cooling means is a heat exchanger, such as a cooling pipe, and the optional cutting means is a FlexiCut (Source Technology).
**Figure 2****.** Schematic representation of a heat exchanger ("cooling pipe").
**Figure 3****.** Schematic representation (longitudinal cross section) of an embodiment of a "cooling pipe" heat exchanger according to **Fig. 2** with an internal volume of ∼1.2 litres, including its dimensions in mm, as well as retention times [s] in dependence of capacity [kg/h]s.
**Figure 4****.** Schematic representation of the drop in pressure over a system according to **Fig. 1A** and/or **B** (not to scale).
**Figure 5****.** Pictures of meat analogue batch UM051.1.5 (left: without cooling pipe ("bypass"); right with cooling pipe).
**Figure 6****.** Pictures of meat analogue batch UM051.1.6 (left: without cooling pipe ("bypass"); right with cooling pipe).
**Figure 7****.** Pictures of meat analogue batch UM051.1.7 (left: without cooling pipe ("bypass"); right with cooling pipe).
**Figure 8****.** Pictures of meat analogue batch UM051.1.8 (left: without cooling pipe ("bypass"); right with cooling pipe).
**Figure 9****.** Pictures of meat analogue batch STO36.1.1 (left: without cooling pipe ("bypass"); right: cutting after cooling pipe).
**Figure 10****.** Pictures of meat analogue batch STO36.1.2 (left: without cooling pipe ("bypass"); right: cutting after cooling pipe).
**Figure 11****.** Pictures of meat analogue batch ST036.1.3 (left: without cooling pipe ("bypass"); centre and right: cutting after cooling pipe).
**Figure 12****.** Pictures of meat analogue batch STO37.1 (left: cutting without cooling pipe ("bypass"); right: cutting after cooling pipe).
**Figure 13****.** Pictures of meat analogue batch STO37.2 (left: cutting without cooling pipe ("bypass"); right: cutting after cooling pipe).

| **Item** | **Reference No.** |
|---|---|
| System for providing a meat analogue | 1 |
| Feeding device/means | 10 |
| Processing device/means | 20 |
| Raw mix entry point | 21 |
| Non-meat dough exit point | 22 |
| Cooling device/means | 30 |
| Cooling device/means product inlet | 31 |
| Cooling device/means product outlet | 32 |
| Cooling fluid inlet | 33 |
| Cooling fluid outlet | 34 |
| Inner product pipe | 36 |
| Outer cooling jacket | 38 |
| Cutting device/means | 40 |
| Temperature and/or pressure control means (not shown | 500; 510, 520, 530, 540 |

### Detailed Description of the Invention

### Definitions

Unless expressed otherwise, all percentages expressed herein are by weight of the total weight of the composition.

When reference is made to the pH, values correspond to pH measured at 25 degrees centigrade with standard equipment and/or procedures.

As used herein, "about" is understood to refer to numbers in a range of numerals, for example the range of -10 to 10, -5 to 5, -2 to 2, -1 to +1, -0.5 to 0.5, -0.1 or 0.1 % of the referenced number. In some embodiments, "about" and/or thereto related expression, such as "comprising or consisting essentially of" and the like may comprise said ranges. In some embodiments, these range may also comprise -20 to 20. Moreover, all numerical ranges herein should be understood to include all integers, whole or fractions, within the range. "About" may also indicate the variations and/or uncertainties customary in the field.

In the context of the present invention, the terms "food," "food product", and/or "food composition" may be used interchangeably, and are meant to comprise a product or composition that is intended for ingestion by an animal or a human, and provides at least one nutrient to the animal or human. The present disclosure may not be limited to a specific animal, human or demography. "Feed" usually refers to food for animals; however in case of pets, it is often called pet food (see below). Usually, there are differences in the requirements in food quality and/or food safety for human food compared to animal food or feed.

The term "pet" means an animal kept primarily for company, protection or entertainment of a human. For example, a pet can be an avian, bovine, canine, equine, feline, hicrine, lupine, murine, ovine, or porcine animal, but the pet can also be a reptile or aquatic animal, such as a fish, mollusc or the like. A typical "companion animal" can e.g. be a dog or a cat. The term "pet food" means any composition intended to be consumed by a pet.

The term" smaller pieces " means a plurality of separate food bodies, and preferably the food bodies are made by slicing the non-meat composition disclosed herein into separate pieces. These can e.g. be slices, stripes, mints, chunks, and/or cubes.

In the context of the present invention, a "non-meat" food product is meant to comprise a composition in which meat (such as skeletal tissue and non-skeletal muscle from e.g. mammals, fish and fowl) and meat by-products (i.e. the non-rendered clean parts, other than meat, derived from slaughtered animals, such as mammals, fowl or fish) are absent.

The terms "enhanced," "improved" or "increased" that are used with features of the non-meat food products of the present disclosure, such as texture, palatability and appearance, are in reference to known non-meat food products.

"Palatability" refers to a quality of a comestible composition that makes the composition appealing or pleasing to one or more of an animal's senses, particularly the senses of taste and smell. As used herein, whenever an animal shows a preference, for example, for one of two or more foods, the preferred food is more "palatable" and has greater "palatability." For companion animals and other non-human animals, the relative palatability of one food compared to one or more other foods can be determined, for example, in side-by-side, free-choice comparisons, e.g., by relative consumption of the foods, or other appropriate measures of preference indicative of palatability.

In the context of the present invention, the singular form of a word may include the plural, and vice versa, unless the context clearly dictates otherwise. Thus, the references "a," "an" and "the" are generally inclusive of the plurals of the respective terms. For example, reference to "an ingredient" or "a method" includes a plurality of such "ingredients" or "methods." In particular, the term "in some embodiments" is to be understood as "in one embodiment", "in some embodiments", and/or "in one or more embodiment(s)".

Similarly, the words "comprise," "comprises," and "comprising" are to be interpreted inclusively rather than exclusively. Likewise, the terms "include," "including" and "or" should all be construed to be inclusive, unless such a construction is clearly prohibited from the context. However, the embodiments provided by the present disclosure may lack any element that is not specifically disclosed herein. Thus, a disclosure of an embodiment defined using the term "comprising" is also a disclosure of embodiments "consisting essentially of and "consisting of the disclosed components. Where used herein, the term "for example," particularly when followed by a listing of terms, is merely exemplary and illustrative, and should not be deemed to be exclusive or comprehensive. Any embodiment disclosed herein can be combined with any other embodiment disclosed herein, unless clearly contradictory.

In the context of the present invention, the term "meat analogue" is meant to comprise a non-meat food product, commonly provided by the use of vegetarian ingredients. Such a meat analogue can also be called "vegetarian meat analogue". A meat analogue may also be devoid of animal products such as dairy products and/or eggs (egg yolk and/or egg white) - such a meat analogue can be referred to as "vegan meat analogue".

A meat analogue may also be lacking gluten - such a meat analogue can be referred to as "gluten-free meat analogue". A vegan meat analogue lacking gluten can be called "gluten-free vegan meat analogue". Furthermore, a meat analogue according to the present invention can also be "kosher". Common terms for meat analogues may comprise: "meat alternative", "meat substitute", "mock meat", "faux meat", "imitation meat", "vegetarian meat", "fake meat", or "vegan meat."

In the context of the present invention, the term "meat analogue raw mix" or "raw mix" is used for the composition used to provide meat analogue, such as the composition or "mix" which is feed into a processing device such as a "PowerHeater", as disclosed herein. Commonly, a raw mix is subjected to (i) a pressure of 1.1-25 bar at an ambient pressure of 1 bar) and (ii) temperature (such as 70-125 °C).

The term "non-meat dough" is used for the product provided by the first processing step, before cooling and/or cutting. Common non-meat dough exit temperatures can be in the range of e.g. 65-110°C. Once cooled, it is usually called "non-meat analogue" herein.

Further definitions may be provided elsewhere.

In a first aspect, the present invention concerns a method for providing a meat analogue, said method comprising the steps of: (a) providing a meat analogue raw mix; (b) processing the raw mix from step (a) at process conditions comprising: (i) a pressure, such as an overpressure, of 1.0-25 bar; and (ii) a temperature of e.g. 70-125°C; wherein said process conditions are adapted to provide a non-meat dough with an exit temperature of 65-110°C, or below 100°C; and optionally, wherein the raw mix is subjected to a higher pressure at the start than at the end of the processing step (b); (c) cooling the non-meat dough by the use of a cooling means to a temperature at least 5°C below said non-meat dough exit temperature to provide the meat analogue; and optionally, providing smaller pieces of said meat analogue, such as smaller pieces, such as slices, stripes, mints, chunks and/or cubes, by cutting using a cutter, such as an automated cutter. Concerning the temperature in step (b), in some embodiments the temperature can be 70°C or lower, such as 60-70°C. In some embodiments, this temperature can also be 125°C or higher, such as 125-140°C, or higher. Further suitable temperature ranges are disclosed herein. Often, the exit temperature does not exceed 100°C, and is thus around 100°C or below. This can be useful to avoid steam flash explosion, which is usually undesirable. In this context, it can also be useful to provide a pressure reduction before the meat dough exits a system or device after processing step (b). Further suitable temperature ranges are disclosed herein. Generally, an improved meat analogue, f.eks. with respect to processability, such as cuttability, can be provided by a more pronounced cooling step (c), such as a cooling by at least 10, 20, 30, 40, 50, or more than 50°C. In some embodiments, the meat non-meat dough is cooled by 35-55 °C. This can e.g. be in chicken or beef meat analogues, such as vegan chicken and/or beef as disclosed herein. Further suitable cooling ranges are disclosed herein.

A suitable device for processing a meat analogue raw mix can e.g. be a device using PowerHeater technology, such as a "PowerHeater" provided by Source Technology (see e.g.:

### https://sourcetechnology.dk/powerheater/process-equipment/powerheater-100/ PowerHeater technology

Commonly, in a PowerHeater (source Technology), the raw mix is provided with a feeding pressure of around 2-25 bars, measured at the PowerHeater inlet, with a constant flow between 0.1 kg/h to 1.500 kg/h, preferably without embedded air. A vacuum filler, such as filler for traditional sausage production can be used for feeding.

In the PowerHeater, the speed of the forward-conveying auger can be adjusted to provide a lower or higher volume displacement relative to the volume provided by the filling device to provide e.g. compression or stretching of the product, respectively.

An outlet temperature, usually around 100°C or below, such as e.g. 80-100°C can be set on the PowerHeater, after which the PowerHeater regulates the flow of steam, to both auger and barrel, to obtain the specified temperature of the product leaving the machine.

The PowerHeater technology is thus very different from the conventional dry, high moisture (wet) extrusion techniques. It is believed that the PowerHeater technology is more environmental friendly and/or more energy efficient compared to conventional extrusion technologies. Furthermore, it is believed that the PowerHeater technology provides a product with different physicochemical properties, such as fewer changes in disulphide bridges (cystein-cystein) bridges and/or other modifications.

Differences between conventional extrusion techniques and the PowerHeater technology are e.g. disclosed in Plattner (2020), Cereal Foods World, Jul-Aug. 2020, Vol 65, No 4, its content being hereby incorporated by reference in its entirety.

Although the PowerHeater technology is referred to as an "extrusion-based technology" by Plattner (2020), this is not a "classical" extrusion technology.

In the context of the present invention, the term "classical extrusion" or "extrusion" can be used interchangeably and are meant to comprise an extrusion process comprising one or more of:
I. an increase in pressure throughout the processing step, such as in the extruder barrel, where a die restricts product flow and causes the required pressure; and/or
II. a rise in temperature is mainly provided via the mechanical energy provided by one or more rotating "screw(s)".

Usually, processing ranges for classical extrusion processes range from 120-160°C, and usually around 130-135°C for plant proteins.

Consequently, in some embodiments according to the first aspect, processing step (b) does not comprise an extrusion process, such as a "classical" extrusion process.

In some embodiments, the method is a continuous method. Generally, in the food industry, continuous methods are preferred to batch processes. However, provision of e.g. the meat analogue raw mix may comprise one or more batch operations. A device such as a PowerHeater can be useful for providing a non-meat dough and/or meat analogue according to the first aspect. Consequently, in some embodiments, a PowerHeater can be used for providing a non-meat dough and/or meat analogue.

In some embodiments, the temperature in processing step (b) can be higher, such as more than 125°C, or 125-135°C, or more than 135°C. In some embodiments, the temperature can be 120 °C or lower than 120°C, 115°C or lower than 115°C, or 110°C or lower than 110°C. In some embodiments, the temperature is in the range of 70-125°C, 75-110 °C or 80-100°C.

In some embodiments, said pressure is in the range of 1.5-25, 2-20, 2.5-10, or 2.5-5 bar. In some embodiments, said pressure is an overpressure, which can be defined as: pressure inside the apparatus or device minus ambient pressure (usually around 1 bar depending on weather and geographical location). In some embodiments, said pressure is the actual pressure inside the apparatus or device. In some embodiments, said pressure is the highest pressure, the raw mix is subjected to during processing in step (b).

The raw mix can be subjected to a pressure reduction in step (b). In some embodiments, this pressure reduction can e.g. be at least 10, 20, 30, 40, 50, 60, 70, 80, 90, or 95% or more. In some embodiments, the % pressure reduction is defined minimum pressure at exit point or just before exiting step (b) divided by max pressure during step (b) × 100. In some embodiments, the pressure reduction is defined as maximum pressure during step (b) minus pressure measured at exit point or just before exiting step (b), and/or before cooling step (c). In some embodiments, the pressure reduction can be 1.1-10 fold, such as 1.1-2 fold, 2-3 fold, 3-4 fold, 4-5, 5-6 fold, 6-7 fold, 7-8 fold, 8-9 fold, or 9-10 fold. In some embodiments, the pressure reduction is more than 10 fold.

In some embodiments, the temperature in step (b) is in the range of 65-125°C;70-120°C, 75-110°C or 80-100°C. In some embodiments, this is the highest temperature, the raw mix is subjected to during processing in step (b). In some embodiments, the temperature is around 70-80°C, 80-90°C, 90-100°C, 100-110°C, or 110-120°C. In some embodiments the temperature is around at least 70, 75, 80, 85, 90, 95, 100, 105, 110, 115, 120, or 125°C, or higher.

In some embodiments, the processing time in step (b) is around 0.2-5 min, 0.33-3 min, or 0.5-2 min. In some embodiments, the processing time is 10 seconds (s) or less, 10-20 s, 20-40 s, 40-60 s, 1.0-1.5 min, 1.5- 3.0 min, or more than 3 min.

Unexpectedly and surprisingly, the inventors have realized that the quality of a meat analogue can be improved e.g. with regards to texture, appearance, and/or cutability by subjecting the raw mix to a cooling step, such as a cooling step providing a cooling of the non-meat dough by at least 5°C, 10°C, 15°C, 20°C, 25°C, 30°C, 35°C, 40°C, 45°C, 50°C, 55°C, 60°C, 65°C or more than 65°C to provide the meat analogue. In some embodiments, the cooling in step (c) is provided by the use of cooling means or device adapted to provide a meat analogue exit temperature of at least 5, 10, 20, 25, 30, 35, 40, 45, 50, 55, 60 or more than 60°C below said non-meat dough exit temperature in step (b).

In some embodiments, the cooling in step (c) is provided by the use of a cooling means or device adapted to provide a meat analogue exit temperature of at least 6, 10, 20 or more than 20°C below the non-meat dough exit temperature in step (b). In some embodiments, the cooling in step (c) is provided by the use of a cooling means or device adapted to provide a meat analogue exit temperature of at least 5-10°C, 10-20°C, 20-30°C, 30-40°C, 40-50°C, 50-60°C, or more than 60°C below the non-meat dough exit temperature in step (b). In some embodiments, the cooling means or device in step (c) is adapted to provide a temperature of 5-10°C, 10-20°C, 20-30°C, 30-40°C, 40-50°C, 50-60°C, or more than 60°C below said non-meat dough exit temperature to provide the meat analogue. In some embodiments, the cooling means or device in step (c) is adapted provided a temperature of 30-65, 35-60, or 35-55°C below said non-meat dough exit temperature to provide the meat analogue. Such ranges can be very suitable for e.g. chicken and or beef meat analogues as disclosed herein. In some embodiments, said temperature(s) can be core and/or surface temperatures.

In some embodiments, said non-meat dough and/or meat analogue exit temperature(s) is/are measured at or on the outside or at, in, or by the core of said non-meat dough and/or meat analogue.

In some embodiments, the cooling means or device in step (c) is adapted to provide a temperature gradient of e.g. 1-45°C, 2-35°C, 3-25°C, 4-15°C, or 5-10°C measured between the core- and the surface temperature of said meat analogue. In some embodiments, said temperature gradient is 2-3°C, 2-4°C, 2-5°C, 2-6°C, 2-7°C, 2-8, 2-9°C, 2-10°C, 2-11 °C, 2-12°C or more than 12°C. In some embodiments, the temperature gradient is 3-5°C, 4-6°C, 5-7°C, 5-8°C, 5-9°C, or 5-10°C. In some embodiments, the temperature gradient is 10-15°C, 15-20°C, 20-25°C, 25-30°C, 30-35°C or more than 35 °C. In some embodiments, the cooling means or device in step (c) is adapted provided a temperature gradient of 2-20, 3-15, 4-12, 5-10, or 6-8°C measured between the core- and the surface temperature of said meat analogue.

In some embodiments, the cooling process is a rapid process, such as a process wherein cooling is achieved in less than 1 min, less than 45 seconds (s), less than 30 s, less than 20s, less than 15s or less than 10s. In some embodiments, the cooling time in (c) is around 0.1-2 min, 0.2-1.5 min, or 0.3-1.0 min. In some embodiments, the cooling time is around 10, 15, 20, 25, 30, 35, 40, 45, 50, 55, or 60 seconds. In some embodiment, the cooling time is longer, such as 70, 80, 90, 100, 110, or 120s or more. In some embodiments, the cooling time is around 0.1-2 min, 0.2-1.5 min, 0.3-1.0 min, 10-60 sec, 15-40 sec, or 20-30sec.

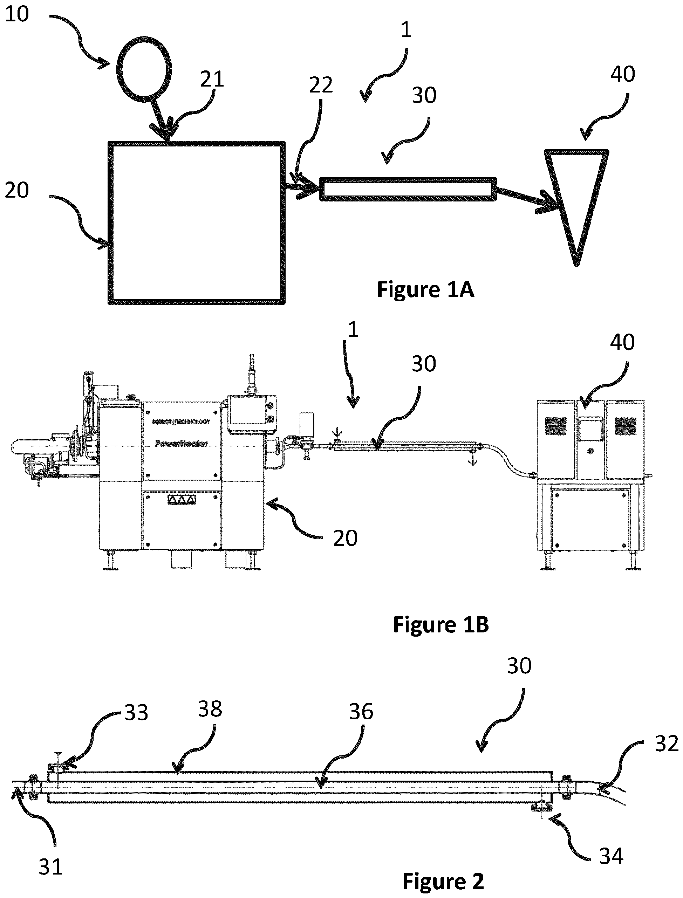

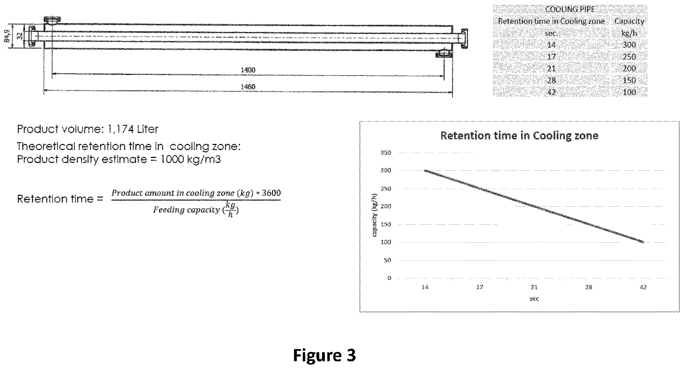

In some embodiments, the cooling means or device in step (c) comprises a heat exchanger, such as a cooling pipe. In some embodiments, said cooling means is a cooling pipe or similar device, such as a device disclosed herein. In some embodiments, said cooling means is a cooling pipe as disclosed herein e.g. in **Figures 2** and/or **3.** Generally, cooling means allowing for a continuous process, such as in-line cooling are believed to be advantageous.

In some embodiments, the cooling means or device in step (c) is a fluid-cooled cooling pipe with a length of 0.5-5, 0.8-2 or around 1 m. In some embodiments, the cooling means or device in step (c) is a cooling pipe with an inner diameter of e.g. 10-60 mm, 20-50 mm or 30-40 mm surrounded by an outer cooling jacket. Often, a cross section of a suitable cooling pipe will have a circular shape. However, it is believed that other shapes may be suitable as well. For example, a cooling device such as a pipe with a rounded, but non circular cross section, such as an ellipse or the like is believed to be useful, in particular a shape providing a larger cooling surface. Further embodiments of a suitable cooling means, such as a cooling pipe are disclosed elsewhere herein.

In some embodiments according to the first aspect, the meat analogue is processed further, such as being subjected to one or more of processing steps and/or unit operations such as: cutting, cooling, freezing, drying, freeze drying, being mixed with a further product, stabilizing, packaging, including any combination thereof. Thus, in some embodiments, the meat analogue is subjected to a further processing step.

In some embodiments, the meat analogue from cooling step (c) is subjected to cutting step (d), adapted to provide smaller pieces of said meat analogue, such as slices, stripes, mints, chunks and/or cubes, by the use of a cutting device, such as a cutter. Suitable cutting devices are known in the field, and include e.g. a UniCut cutting system or FlexiCut system from Source Technology.

In a second aspect, the present invention relates to a meat analogue obtained or obtainable by a method according to the first aspect.

Generally, the term "meat analogue" is not to be construed as being limited to a product that resembles meat and/or a traditional meat product. In some embodiments, the "meat analogue" is a structured food product with similar nutritional profile to traditional meat products. In some embodiments, the "meat analogue" may comprise one or more of: protein (5 - 25%); fat (3 - 25%); carbohydrate (0.01% - 20%); water (40% - 90%). A meat analogue may also comprise further components, such as one or more hydrocolloid(s), one or more enzyme(s), one or more flavour(s), and/or one or more colour(s), including any combination(s) thereof. In some embodiments, the meat analogue comprises: protein (5 - 25%); fat (3 - 25%); carbohydrate (0.01% - 20%); further component(s) (0.01- 1, 0.1-1.0% or more); water e.g. (40% - 90%); including any combination thereof.

In some embodiments, the meat analogue is provided as disclosed in the **Examples.** In some embodiments, the meat analogue may comprise a composition as disclosed in any one of the recipes disclosed herein, such as in the **Examples,** e.g. **Example 2.** In some embodiments, said raw mix comprises a composition essentially as disclosed in any one of the **Examples.** "Essentially as disclosed" in this context is meant to comprise similar recipes, e.g. with variations of +/- 25 % of any ingredient in the recipe. "Essentially as disclosed" is also meant to comprise similar ingredients, fulfilling a similar role of function, such as ingredients or composition than can be substituted without significant effort by a person skilled in the art.

Commonly, a meat analogue does not comprise meat and/or muscle. However, a meat analogue may comprise dairy products and/or eggs, including any fraction(s) thereof, such as egg yolk, egg white, milk protein, milk fat and the like.

In some specific embodiments, the meat analogue may comprise muscular protein. Such a meat analogue may be called a "hybrid meat analogue". In some embodiments, the hybrid meat analogue comprises 0.1-5.0, 5.0-10, 10-20, 20-30, 30-40, 40-50, 50-60. 60-70, 70-80 or more than 80% muscular protein. In some embodiments, the ratio of muscular protein : plant protein is around 1:95,10:90, 20:80, 25:75, 30:70, 33:66, 40:60, 45:55, or 50:50. In some embodiments, the ratio of plant protein : muscular protein is around 5:95,10:90, 20:80, 25:75, 30:70, 33:66, 40:60, 45:55, or 50:50.

In some embodiments, the structure and/or texture of the meat analogue resembles meat. In some embodiments, the structure and/or texture of the meat analogue does not resemble meat. In some embodiments, structure and/or texture as well as nutritial profile of the meat analogue resembles meat. In some embodiments, either structure (and/or texture) or nutritial profile of the meat analogue resembles meat.

Structure and/or texture of the meat analogue can e.g. be provided by processing a mix of water, with one or more types of proteins derived from e.g. plants, microorganisms, cell-cultures or non-muscular animal products, usually by heating and or providing pressure, thus denaturing at least a portion of the proteins.

Concerning "plant protein", this term is meant to comprise any protein or protein product obtained or obtainable from any process from any type plant. Such products and/or methods are known in the field, and may plant protein products are commercially available. Often, but by no means exclusively, plant proteins are provided from the following plant families: legumes, cereals and Solanum.

One or more different meat analogues can be provided by a method according to the first aspect, and/or by the use of such a method and/or system, such as according to the fifth or sixth aspect of the invention.

Usually, such meat analogues do not comprise meat protein, and can be considered "vegetarian". In some embodiments, the meat analogue is a vegan product. In some embodiments, the meat analogue is gluten-free. In some embodiments, the meat analogue is kosher. In some embodiments, the meat analogue is a poultry (e.g. chicken or turkey), mammalian (e.g. beef or pork), reptile (e.g. snake or crocodile) or fish meat analogue.

In some embodiments, the meat analogue is any combination of the above possibilities, such as one or more of: vegetarian, vegan, gluten-free, kosher. In some embodiments, the meat analogue is a poultry (e.g. chicken or turkey), mammalian (e.g. beef or pork), reptile (e.g. snake or crocodile) or fish meat analogue, and optionally one or more of: vegetarian, vegan, gluten-free, kosher, including any combination(s) thereof.

In some embodiments, the meat analogue is an intermediate or final product.

In some embodiments, the meat analogue is a food for human and/or animal consumption. In some embodiments, the meat analogue is a food or feed for animal consumption, such as pet food, in particular cat or dog food.

In some embodiments, the raw mix is adapted to provide a meat analogue as disclosed above. In some embodiments, the raw mix is adapted to provide a vegan product/meat analogue. In some embodiments, the raw mix is adapted to provide a vegan product/meat analogue. In some embodiments, the raw mix is adapted to provide a gluten-free product/meat analogue. In some embodiments, the raw mix is adapted to provide a kosher meat product/analogue. In some embodiments, the raw mix is adapted to provide a poultry (e.g. chicken or turkey), mammalian (e.g. beef or pork), reptile (e.g. snake or crocodile) or fish meat product/analogue.

In some embodiments, the raw mix is a recipe as disclosed herein, such as any recipe disclosed herein, such as in the section **Examples.** In some embodiments, the raw mix recipe is essentially as disclosed herein, and or in the **Examples.** In this context, essentially as disclosed herein is to be understood as a recipe comprising similar amounts, and or ingredients.

In some embodiments, the raw mix is adapted to provide a final meat analogue product. In some embodiments, the raw mix is adapted to provide an intermediate product, intended to be incorporated into a further food or feed product. This further incorporation may comprise one or more further processing steps known in the field.

In some embodiments, the raw mix is adapted to provide a meat analogue food for human and/or animal consumption. In some embodiments, the raw mix is adapted to provide a meat analogue for pet food, such a cat- or dog food.

In some embodiments, the protein in the meat analogue raw mix and/or the meat analogue (in the following, abbreviated to "meat analogue (raw mix)") is or comprises plant protein(s). In the context of the present invention, and in particular in the context of the following embodiments, the term "is or comprises" is meant to comprise "is", "consists of', "consists essentially of', and "comprises". In some embodiments, the protein in the meat analogue (raw mix) is or comprises non-meat animal protein(s). In some embodiments, the protein in the meat analogue (raw mix) is or comprises microbial protein(s), such as bacterial or fungal protein(s). Said fungal protein(s) can e.g. be provided by or from an edible fungus, such as *Fusarium venenatum.*

In some embodiments, the protein(s) in the meat analogue (raw mix) is (are) selected from one or more of: plant protein(s), non-meat animal protein(s), and microbial protein(s), including any combination(s) thereof.

In some embodiments, the fat in the meat analogue (raw mix) is or comprises plant fat(s). In some embodiments, the fat in the meat analogue (raw mix) is or comprises non-meat animal fat(s). In some embodiments, the fat in the meat analogue (raw mix) is or comprises microbial fat(s), such as bacterial or fungal fat(s). Said fungal fat(s) can e.g. be provided by or from an edible fungus. In some embodiments, the fat(s) in the meat analogue (raw mix) is (are) selected from one or more of: plant fat(s), non-meat animal fat(s), and microbial fat(s), including any combination(s) thereof.

In some embodiments, the carbohydrate in the meat analogue (raw mix) is or comprises plant carbohydrate(s). In some embodiments, the carbohydrate in the meat analogue (raw mix) is or comprises non-meat animal carbohydrate(s). In some embodiments, the carbohydrate in the meat analogue (raw mix) is or comprises microbial carbohydrate(s), such as bacterial or fungal carbohydrate(s). Said fungal carbohydrate(s) can e.g. be provided by or from an edible fungus, such as *Fusarium venenatum.* In some embodiments, the carbohydrate(s) in the meat analogue (raw mix) is (are) selected from one or more of: plant carbohydrate(s), non-meat animal carbohydrate(s), and microbial carbohydrate(s), including any combination(s) thereof.

In some embodiments, the meat analogue (raw mix) comprises textured plant protein, plant protein or any combination thereof that has undergone a processing step, such as extrusion, causing at least a fraction of the proteins to unfold and/or denature, align and cross link to cohesive chunks in various sizes.

In some embodiments, the meat analogue (raw mix) comprises one or more plant proteins, such as textured or non-textured plant proteins, including any combination thereof. In some embodiments, the concentration of the plant protein(s) is e.g. 0.1 % - 99.9 %. In some embodiments, the concentration of the one or more plant protein(s) is 0.1% - 1.0%, 0.5-2.0%, 1.0-5.0%, 4.0-10%, 8.0-14.0%, 12-16%, or 15-20%, 20-40%, 40-60%, 60-80%, or more than 80%.

In some embodiments, the meat analogue (raw mix) comprises water, such as 0.1-99.9 %. In some embodiments, the recipe for the meat analogue (raw mix) comprises water "up to 100 %", i.e. water being added to the different ingredients and/or components of the recipe, so that the combined weights of the different components + water add up to 100 %.

In some embodiments, the meat analogue (raw mix) comprises one or more hydrocolloids suitable for binding water, such as methyl cellulose, hydroxypropylmethyl cellulose, calcium alginate, carrageenan, galactomannans, pectins, including any combinations thereof. In some embodiments, the concentration of the hydrocolloid(s) the meat analogue (raw mix) is e.g. 0.01% - 20.0%. In some embodiments, the concentration of one or more hydrocolloid(s) is 0.01%-1.0%, 0.5-2.0%, 1.0-5.0%, 4.0-10%, 8.0-14.0%, 12-16%, or 15-20%. In some embodiments, the concentration of one or more hydrocolloid(s) is more than 20%.

In some embodiments, the carbohydrate(s) in the meat analogue (raw mix) is or comprises carboxymethyl cellulose (CMC). CMC or cellulose gum is a cellulose derivative with carboxymethyl groups (-CH2-COOH) bound to some of the hydroxyl groups of the glucopyranose monomers that make up the cellulose backbone. CMC is often used as its sodium salt, sodium carboxymethyl cellulose.

In some embodiments, the meat analogue (raw mix) comprises one or more enzymes, such as one or more protein crosslinking enzymes, including transglutaminase. In some embodiments, the concentration of the crosslinking enzyme(s) the meat analogue (raw mix) is e.g. 0.001% - 10.0%. Commonly such enzymes will be denatured and thus deactivated during the process of provision of a meat analogue according to the present invention. In some embodiments, the concentration of one or more enzyme(s) is 0.01% - 1.0%, 0.5-2.0%, 1.0-5.0%, 3.0-8.0%, or 5.0-10%. In some embodiments, the concentration is the enzyme of one or more hydrocolloid(s) is more than 20%. The enzyme can e.g. an essentially pure enzyme preparation, or comprise further agents.

In some embodiments, the meat analogue (raw mix) comprises starch or amylose derived from plants, including but not limited to, potato, corn, rice, cassava, pea. In some embodiments, the concentration of the starch or amylose in the meat analogue (raw mix) is comparable to conventional meat. In some embodiments, the concentration is higher. In some embodiments, the concentration is lower.

In some embodiments, the meat analogue (raw mix) comprises one or more flavours, preferably natural flavours. These can e.g. be derived from plant proteins by enzymatic, chemical, and/or heat treatment to form shorter polypeptides and/or free amino acids, e.g. providing umami flavour. In some embodiments, the concentration of the flavour(s) in the meat analogue (raw mix) is e.g. 0.01-1%, or higher. In some embodiments, the concentration is 0.01 or less.

In some embodiments, the meat analogue (raw mix) comprises one or more functional proteins, such as animal-derived, non-meat, proteins like egg albumin, whey and/or casein. In some embodiments, the concentration of the one or more functional protein in the meat analogue (raw mix) is e.g. 0.1-1%, 1-5% or higher.

In some embodiments, the meat analogue (raw mix) comprises one or more microbial proteins, such as yeast-, fungal-, or bacterial derived proteins. In some embodiments, the concentration of the one or more microbial protein in the meat analogue (raw mix) is comparable to the protein content of conventional meat. In some embodiments, the concentration is higher. In some embodiments, the concentration is lower.

In some embodiments, the meat analogue (raw mix) comprises one or more colours and/or colouring food stuff, preferably natural colours and/or colouring food stuff, such as extracts from beet red, malt, carthamus and sweet potato, caramel, and/or burned sugar, including any combination thereof. In some embodiments, the concentration of the one or more colour and/or colouring foodstuff in the meat analogue (raw mix) is e.g around or below 1.0, 0.5, 0.01%.

In a third aspect, the present invention pertains to a further product comprising 1- 99% of a meat analogue according to the second aspect. In some embodiments, the further product comprises around 1-10%, 5-20%, 10-40%, 20-60%, 40-80%, or 60-99% of a meat analogue according to the second aspect.

In some embodiments, the further product can e.g. a meal comprising the meat analogue, such as a ready meal, processed meal, convenience food, instant food and the like. In some embodiments, the further product is a pet food, such as cat or dog food, e.g. packaged in a tin can or other suitable packaging.

In a fourth aspect, the present invention concerns a system for providing a meat analogue according to the first, second or third aspect. Such a system may comprise: a processing device 20 for processing a meat analogue raw mix to provide a non-meat dough, said processing device comprising: (i) propulsion means, such as an auger and/or pressure, to provide defined/controlled movement of the raw mix from a raw mix entry point 21 to a non-meat dough exit point 22; (ii) pressure means for subjecting the raw mix to a defined/controlled overpressure, such as of 1-25 bar; and (iii) heating means for heating the raw mix to a defined/controlled temperature, such as 70-125 °C; and cooling device 30, such as a heat exchanger, e.g. a cooling pipe, for rapid cooling of the non-meat dough by at least 5 °C to provide the meat analogue; wherein said cooling device is in fluid connection with the food processing device.

A schematic overview of an embodiment of a system 1 according to the fourth aspect is given in **Figure 1A****,** while **Figure 1B** shows a specific embodiment comprising a PowerHeater (Source Technology) processing device 20, and a FlexiCut (Source Technology) cutting device 40 for cutting the meat analogue.

The raw mix can be provided to the processing device 20 at the raw entry point 21, e.g. by the help of feeding means 10 such as a feeding device 10, which can vacuum feeder, or another feeder or feeder system known in the field.

Immediately after exiting the processing device 20 at the non-meat dough exit point 21, a cooling means such as a cooling device 30 is provided for cooling the non-meat dough passes through a cooling device 30 for cooling the non-meat dough to provide the meat analogue. Preferably, the cooling device/means 30 is in fluid connection with the processing device 20.

The non-meat dough is passes through a cooling means/device that reduces the temperature of the dough while still in a closed system, such as that e.g. no evaporation of water from the product to surrounding environment occurs. It is believed that this type of cooling result in less evaporation, and/or "drying out" of the product once it is exposed to free surroundings. Furthermore, it is believed that this cooling stabilizes the product, when subjected to a subsequent in-line cutting process. Generally, after the cooling (cooling step (c)), the product can either be used as is or processed further, such as by cutting by with e.g. an inline cutting device.

Optionally, in some embodiments a, cutting means 40 such as a cutting device, such as an automatic cutter, which can e.g. be FlexiCut (Source Technology) cutting device 10, or another suitable, preferably automated cutting means 10 can be used for cutting the meat analogue in to smaller pieces. It is believed that other cutting devices, such as commercially available cutting devices can be used as well.

In some embodiments, the cooling device/means 30 is in fluid connection with a processing device 20 and a cutting means/device 40, and provided between a processing device 20 and a cutting means/device 40.

**Figure 2** illustrates an embodiment of a cooling means/device 30 for according to the present invention. In some embodiments, the cooling device 30 is a heat exchanger, such as a "cooling pipe" 30 comprising inner product pipe 36 surrounded at least in part by an outer cooling jacket 38, such as a pipe, comprising a cooling fluid inlet 33 and a cooling fluid 34. When in use, the product to be cooled such as the non-meat dough is fed in the cooling device 30 at the cooling means product inlet 31, and exits the cooling device 30 at the cooling means product outlet 32, e.g. as a non-meat analogue. Cooling is provided by a cooling fluid, such as water or other cooling fluids known in the field.

In some embodiments, non-meat dough exit point 22, product inlet 31 and/or product outlet 32 comprise fastening means, such as flange or the like, for providing a fluid connecting between processing device 20 and cooling device 30, and optionally with the cutting device 40.

**Figure 3** illustrates an embodiment of a "cooling pipe" heat exchanger 30 according to e.g. **Figure 2****.** The inner diameter of the inner product pipe 36 is ∼32 mm, and the outer diameter of the outer cooling jacket is ∼85 mm. The inner volume is ∼1.2 litres. The length of the cooled section ("cooling zone") of the cooling pipe 30 is ∼1460 mm.

Based on the following assumptions, retention times and capacity can be calculated:

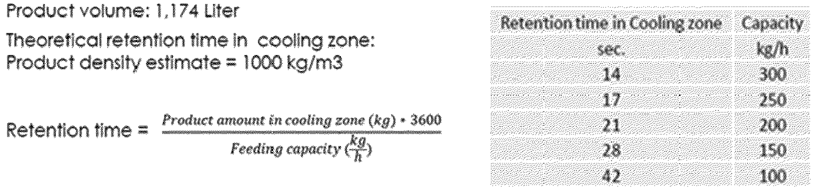

Provided with the above information, it is submitted that the person skilled in the art can provide a suitable cooling device depending on the desired capacity and the amount of cooling without undue burden, e.g. by modifying one or more of volume of the cooling zone (length and/or diameter), flow rate and cooling efficiency (e.g. temperature of the cooling fluid, its flow rate etc).

In some embodiments, the system comprises cutting device 40 for cutting the meat analogue into smaller pieces, slices, stripes, mints, chunks and/or cube, such as a cutting device 40 adapted to cut to the meat analogue e.g. in a longitudinal and/or one or more further directions, such as a cross direction. In some embodiments, the cutting device 40 is a FlexiCut device (Source Technology).

In some embodiments, the system comprises a feeding device 10, such as a vacuum feeder, for feeding the processing device 20 with the raw mix.

In some embodiments, the feeding device 10 comprises a temperature control means 510.

In some embodiments, the system comprises one or more control means 500, 510, 520, 530, and/or 540 for controlling the temperature of said feeding device 10, processing device 20, cooling device 30 and/or cutting device 40, and/or the pressure in said processing device 20.

In some embodiments, the system is a continuous system.

In some embodiments, the cooling device 30 is arranged between the processing device 20 and the cutting device 40.

In some embodiments, the system is adapted to provide, when in operation, a meat analogue with a surface temperature being at least 2, 3, 4, 5, 6, 7, 8, 9, or 10°C lower than the surface temperature of meat dough, said temperature difference being measured at the meat dough exiting point and right after the meat analogue exits the cooling means/device (e.g. at the cooling device/means product outlet 32). In some embodiments, the system is adapte to provide a meat analogue which is at least 5°C, 10°C, 15°C, 20°C, 25°C, 30°C, 35°C, 40°C, 45°C, 50°C, 55°C, 60°C, 65°C or more than 65°C colder than the non-meat dough. In some embodiments, the system is adapted to provide, when in operation, a meat analogue with a temperature (surface, core or average temperature) being at least 5 °C, 10 °C, 15 °C, 20 °C, 25 °C, 30 °C, 35 °C, 40°C, 45°C, 50°C, 55°C, 60°C, 65°C or more than 65°C lower than the corresponding (surface, core or average) temperature of the meat dough measured at the meat dough exiting point.

In some embodiments, the cooling and/or reduction in surface temperature and/or reduction in core temperature and/or reduction in average temperature is rapid, such as achieved within less than 1 min, less than 45 seconds (s), less than 30 s, less than 20s, or less than 10s. In some embodiments, the cooling time is around 0.1-2 min, 0.2-1.5 min, or 0.3-1.0 min. In some embodiments, the cooling time is 5-10, 10-15, 15-20, 20-30, or 40-60 s. In some embodiments, the cooling time is, around 8, 10, 12, 15, 20, 25, 30, 35, 40, 45, 50, 55 or 60s. In some embodiments, the cooling time is more than 1 min, such as 1-2 min, or more.

In some embodiments, the cooling device 30 comprises an inner product pipe 36, surrounded by an outer cooling jacket 38.

In some embodiments, the cooling device comprises a fluid cooling media, such as water.

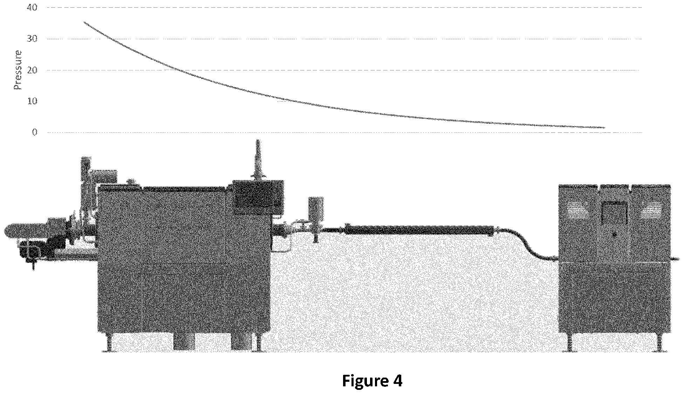

In some embodiments, the processing device 20 is adapted to subject the meat analogue raw mix to a higher pressure at the start than at the end of processing. This is e.g. illustrated in **Figure 4** (not to scale), showing a schematic representation of a drop in pressure over a system 1 according to the present invention, such as in **Figure 1A** and/or **B** (not to scale). An essentially similar pressure curve will be seen, regardless if a cutting device 40 is present or not.

In some embodiments, the pressure difference (max pressure minus meat dough exit pressure) is in the order of 0.5-1 bar, 1-2 bar, 2-4 bar, 4-8 bar, 8-12 bar, 12-15 bar, 15-20 bar, or more than 20 bar. In some embodiments, the system does not comprise extrusion, such as "classical extrusion" as disclosed and/or defined elsewhere herein. In some embodiments, the processing device 20 is not an extruder, and/or does not comprise means for classical extrusion means as disclosed and/or defined elsewhere herein.

In some embodiments, the system is adapted to provide a meat analogue according to any one of the preceding aspects.

For the avoidance of doubt, one or more embodiments related to one aspect may also to be applicable for any other aspect, unless clearly contradictorary.

In a fifth aspect, the present invention concerns a meat analogue obtained or obtainable by the use of a system according to the fourth aspect. such as a meat analogue according e.g the second or third aspect

In a sixth aspect, the present invention relates to the use of a system according to the fourth aspect for providing a meat analogue, such as a meat analogue according to the first aspect. In some embodiments, said use may provide a meat analogue according e.g. the second or third aspect.

In a seventh aspect, the present invention pertains to a computer program product comprising software code portions configured for, when run in the memory of a computer, executing the method according to the first aspect and/or the system according to the fourth aspect.

As also substantiated in the following sections, in particular in the **Examples,** the inventors provide experimental evidence that different meat analogues, such as chicken or beef meat analogues, can be provided with improved product quality, such as one or more of cutability, optical appearance, texture, consistency, mouth-feel, resemblance to "real" meat, by the use of a cooling means, said cooling means being adapted to provide a rapid cooling of the meat dough exiting the processing device. Such results can be obtained consistently by the use of a cooling means such as a cooling pipe, as disclosed herein.

It is observed that when reducing the surface temperature around 30-60°C by the use of a cooling device, a meat analogue with improved product quality is obtained. It is believed that similar, positive results with respect to product quality can be obtained by cooling less, and/or by cooling more.

It is also observed that a rapid cooling providing a reduction in core temperature, such as by around 25-55°C appears to contribute to said product quality/qualities. It is again believed that similar, positive results with respect to product quality can be obtained by cooling less, and/or by cooling more.

It is further observed that the provision of a temperature gradient, e.g. by around 5-10°C appears to contribute to product quality. It is believed that similar, positive results withy product quality could be obtained by providing a greater or smaller temperature gradient.

Further embodiments are e.g. disclosed in the following sections **"Numbered Embodiments"** and **"Examples"**.

### Numbered Embodiments

1. A method for providing a meat analogue, said method comprising the steps of:
   a. Providing a meat analogue raw mix;
   b. Processing the raw mix from step (a) at process conditions comprising:
      i. an overpressure of 1.0-25 bar; and
      ii. a temperature of 70-125°C;
      wherein said process conditions are adapted to provide a non-meat dough with an exit temperature of 65-110°C; and wherein the raw mix is subjected to a higher pressure at the start than at the end of the processing step (b);
   c. Cooling the non-meat dough by the use of a cooling means or device to a temperature at least 5°C below said non-meat dough exit temperature to provide the meat analogue; and optionally
   d. Providing smaller pieces of said meat analogue, such as, slices, stripes, mints, chunks and/or cubes by cutting using a cutter.
2. A method according to embodiment 1, wherein said method is a continuous method.
3. A method according to embodiment 1 or 2, wherein the overpressure in step (b) is in the range of 1.5-25, 2-20, 2.5-10, or 2.5-5 bar.
4. A method according to any one of the preceding embodiments, wherein the temperature in step (b) is in the range of 70-125°C, 75-110 °C or 80-100°C.
5. A method according to any one of the preceding embodiments, wherein the pressure reduction in step (b) is at least 10, 20, 30, 40, 50, 60, 70, 80, 90% or more.
6. A method according to any one of the preceding embodiments, wherein the processing time in step (b) is around 0.2-5 min, 0.33-3 min, or 0.5-2 min.
7. A method according to any one of the preceding embodiments, wherein the cooling time in (c) is around 0.1-2 min, 0.2-1.5 min, or 0.3-1.0 min, such as 10-60 sec, 15-40 sec, or 20-30sec.
8. A method according to any one of the preceding embodiments, wherein the cooling in step (c) is provided by the use of a cooling means or device adapted to provide a meat analogue exit temperature of at least 5, 10, 20, 25, 30, 35, 40, 45, 50, 55, 60 or more than 60°C below said non-meat dough exit temperature in step (b).
9. A method according to any one of the preceding embodiments, wherein said non-meat dough and/or meat analogue exit temperature(s) is/are measured on the outside or by the core of said dough and/or meat analogue.
10. A method according to any one of the preceding embodiments, wherein the cooling means or device in step (c) is adapted to provide a temperature gradient of 2-20, 3-15, 4-12, 5-10, or 6-8°C measured between the core- and the surface temperature of said meat analogue.
11. A method according to any one of the preceding embodiments, wherein the cooling means or device in step (c) is adapted to provide a surface and/or core temperature of at least 5-10°C, 10-20°C, 20-30°C, 30-40°C, 40-50°C, 50-60°C, or more than 60°C; or 30-65, 35-60, or 35-55°C below said non-meat dough exit temperature to provide the meat analogue.
12. A method according to any one of the preceding embodiments, wherein the cooling means or device in step (c) comprises a heat exchanger, such as a cooling pipe.
13. A method according to any one of the preceding embodiments, wherein the cooling means or device in step (c) is a fluid-cooled cooling pipe with a length of 0.5-5, 0.8-2 or around 1 m, and/or a cooling pipe with an inner diameter of 10-60, 20-50 or 30-40mm surrounded by an outer cooling jacket.
14. A method according to any one of the preceding embodiments, wherein the meat analogue is processed further, such as being subjected to one or more of: cutting, cooling, freezing, drying, freeze drying, being mixed with a further product, stabilizing and/or packaging.
15. A method according to any one of the preceding embodiments, wherein said process does not comprise an extrusion process, such as a classical extrusion process.
16. A method according to any one of the preceding embodiments, wherein said raw mix comprises a composition essentially as disclosed in any one of the Examples.
17. A method according to any one of the preceding embodiments, wherein the meat analogue is a vegan product.
18. A method according to any one of the preceding embodiments, wherein the meat analogue is gluten-free.
19. A method according to any one of the preceding embodiments, wherein the meat analogue is kosher.
20. A method according to any one of the preceding embodiments, wherein the meat analogue is a poultry (e.g. chicken or turkey), mammalian (e.g. beef or pork), reptile (e.g. snake or crocodile) or fish meat analogue.
21. A method according to any one of the preceding embodiments, wherein the meat analogue is an intermediate or final product.
22. A method according to any one of the preceding embodiments, wherein the meat analogue is a food for human and/or animal consumption.
23. A meat analogue obtained or obtainable by a method according to any one of the preceding embodiments, such as a meat analogue obtained or obtainable by a method according to any one of the preceding claims, wherein
   - the non-meat dough exit temperature is 70-100°C;
   - the meat analogue exit temperature is at least 10 or 20°C lower than the non-meat dough exit temperature and/or 50-70°C;
   - and said cooling time 15-40 sec.
24. A further product comprising 1-99% of the meat analogue according to any one of the preceding embodiments.
25. A system for providing a meat analogue from a meat analogue raw mix, said system comprising:
   a. a processing device (20) for processing a meat analogue raw mix to provide a non-meat dough, said processing device comprising:
      i. Propulsion means, such as an auger and/or pressure, to provide defined/controlled movement of the raw mix from a raw mix entry point (21) to a non-meat dough exit point (22);
      ii. Pressure means for subjecting the raw mix to a defined/controlled overpressure, such as 1-25 bar;
      iii. Heating means for heating the raw mix to a defined/controlled temperature, such as 70-125 °C; and
   b. a cooling device (30), such as a heat exchanger, e.g. a cooling pipe, for rapid cooling of the non-meat dough by at least 5°C to provide the meat analogue; wherein said cooling device is in fluid connection with the food processing device.
26. A system according to embodiment 25, comprising a feeding device (10), such as a vacuum feeder, for feeding the processing device (20) with the raw mix, and optionally, wherein the feeding device comprises a temperature control means (510).
27. A system according to embodiment 25 or 26, comprising a cutting device (40) for cutting the meat analogue into smaller pieces, slices, stripes, mints, chunks and/or cubes, such as a cutting device (40) adapted to cut the meat analogue in a longitudinal and/or cross direction.
28. A system according to any one of embodiments 25-27, comprising one or more control means (500, 510, 520, 530, 540) for controlling the temperature of said feeding device (10), processing device (20), cooling device (30) and/or cutting device (40), and/or the pressure in said processing device (20).
29. A system according to any one of embodiments 25-28, wherein said system is a continuous system.
30. A system according to any one of embodiments 25-29, wherein the cooling device (30) is arranged between the processing device (20) and the cutting device (40).
31. A system according to any one of embodiments 25-30, adapted to provide, when in operation, a meat analogue with a surface temperature being at least 5°C lower than the surface temperature of meat dough, said temperature difference being measured at the meat dough exiting point and the product outlet (32).
32. A system according to any one of embodiments 25-31, adapted to provide, when in operation, a meat analogue with a core temperature being at least 5°C lower than the core temperature of meat dough measured at the meat dough exiting point.
33. A system according to any one of embodiments 25-32, wherein said cooling and/or reduced surface temperature and/or core temperature is achieved within 5, 10, 15, 20, 25, 30, 35, 40, 45, 50 or 60 seconds.
34. A system according to any one of embodiments 25-33, wherein said cooling device (30) comprises an inner product pipe (36), surrounded by an outer cooling jacket (38).
35. A system according to any one of embodiments 25-34, wherein said cooling device comprises a fluid cooling media, such as water.
36. A system according to any one of embodiments 25-35, wherein the processing device (20) is adapted to subject the meat analogue raw mix to a higher pressure at the start than at the end of processing.
37. A system according to embodiment 36, wherein the pressure difference is in the order of 0.5-25, 1.0-20, 1.5-15, or 2.0-10 bar, and/or at least 10, 20, 30, 40, 50, 60, 70, 80, or 90%.
38. A system according to any one of embodiments 25-37, wherein said system does not comprise extrusion.
39. A system according to any one of embodiments 25-38, wherein the processing device (20) is not an extruder, and/or does not comprise classical extrusion means.
40. A system according to any one of embodiments 25-39, adapted to provide a meat analogue according to embodiment 23 and/or a product according to embodiment 24.
41. A meat analogue obtained or obtainable by a system according to any one of embodiments 25-40.
42. Use of a system according to any of embodiments 25-41 for providing a meat analogue.
43. Use according to embodiment 42 for providing a meat analogue according to embodiment 23 or 41, and/or a product according to embodiment 24.
44. A computer program product comprising software code portions configured for, when run in the memory of a computer, executing the method according to any one of embodiments 1-22, and/or the system according to any one of embodiments 25-40.

### Examples

### Example 1 - Provision of meat analogue raw mix

An emulsion or slurry (also called meat analogue raw mix herein) is prepared by combining different ingredients (usually in powder form) by the use of mixing equipment customary in the field.

For formulation comprising methylcellulose (MC), MC can e.g. be incorporated by the following three methods, which are believed to provide optimal and/or controlled dissolution of MC in the water:
(1) Pre-dispersion of the MC in the oil phase before combining with the water phase followed by high shear mixing.
(2) Pre-blend the MC with other dry ingredients before combining with water and subjecting to high shear mixing.
(3) Disperse the MC in water, by keeping the temperature of the water well above the dissolution temperature of the MC, thus preventing solubilization. Next, the water temperature is decreased to below the dissolution temperature before subjecting the mix to high shear mixing.

The textured proteins are mixed, without cutting and/or high shear mixing, for preserving the structure of the textured proteins, providing the final product with at fibrous structure. The textured proteins can be pre-hydrated and/or shredded to minor pieces before being mixed-in.

The final raw mix of emulsion/slurry and textured proteins (= meat analogue raw mix) is to be applied to the PowerHeater e.g. by the use of a vacuum filler customary in the field.

Further details and/or embodiments concerning meat analogue raw mix recipes and experimental setups are also disclosed in the following **Examples:**

### Example 2A - Raw mix recipes (51.1.4-9)

Different raw mix samples were prepared and processed as disclosed herein:

**Table Ia: Overview**

| **Application** | **Batch number** | **Description (functional ingredients)** | **PowerHeater exit temperature (°C)** | **Cooling pipe exit temp (surface/core) (°C)** |
|---|---|---|---|---|
| Vegan chicken | UM051.1.4(M) | Emulsion 2 (1:2:5), SuperTex 1:3, Arcon SM, Methocel, Solanic. | 92 | 53/60 |
| Vegan chicken | UM051.1.5(M) | Emulsion 1 (1:5:15), TruTex 1:3, Arcon SM, Methocel, Solanic. | 92 | n.d. |
| Vegan chicken | UM051.1.6(M) | Emulsion 2 (1:2:5), TruTex 1:3, Arcon SM, Methocel, Solanic. | 94 | n.d. |
| Vegan chicken | UM051.1.7(B) | SuperTex, Arcon F, Arcon SM, Methocel, Oil, Solanic | 93 | n.d. |
| Vegan chicken | UM051.1.8(B) | SuperTex, Arcon F, Arcon SM, Methocel, Oil, Solanic | n.d. | n.d. |
| Vegan chicken | UM051.1.9(B) | Textura, Arcon F, Arcon SM, Methocel, Oil, Solanic | n.d. | n.d. |

| | | | | |
|---|---|---|---|---|
| *M: Mixer; B Bowl chopper; n.d. not determined, but presumably within at least* +/- *5 °C of the values UM051.1.4* | | | | |

**Table II: Recipes - emulsions and SuperTex**

| | | | 1:5:15 | | 1:2:5 | | 1:3 | | 1:4:4 | |
|---|---|---|---|---|---|---|---|---|---|---|
| Code | Ingredients | Fat | Emulsion 1 | | Emulsion 2 | | Emulsion 3 | | Shred 1 | |
| | | | Batch | 60 | Batch | 60 | Batch | 60 | Batch | 60 |
| | | % | Kg | % | Kg | % | Kg | % | Kg | % |
| I_09 | Water | | **42.857** | 71.429 | **37.500** | 62.500 | **26.667** | 44.444 | **60.000** | 75.000 |
| I_107 | SuperTex(Solbar) | 8 | | | | | | | **20.000** | 25.000 |
| I_155 | ArconSM_Soy_AM | 3 | | | | | **6.667** | 11.111 | | |
| I_98 | Methocel SG A 16M | | **2.857** | 4.762 | | | | | | |
| I_35 | Vegetable oil | 100 | **1.4286** | 23.810 | **15.000** | 25.000 | **26.667** | 44.444 | | |
| | Vegemul R 16.5 | | | | **7.500** | 12.500 | | | | |
| TOTAL | | | **60.000** | 100.000 | **60000** | 100.000 | **60.000** | 100.000 | **80.000** | 100.000 |

| **NUTRITIONAL VALUES** | | | % | | % | | % | | % | |
|---|---|---|---|---|---|---|---|---|---|---|
| PROTEIN | | | | | | | 7.2 | | 17 | |
| CARBOHYDRATES | | | 4.5 | | | | 2.3 | | 3.5 | |
| FAT | | | 23.8 | | 25.0 | | 44.8 | | 2.0 | |
| MOISTURE | | | 71.7 | | 75.0 | | 45.1 | | 76.1 | |

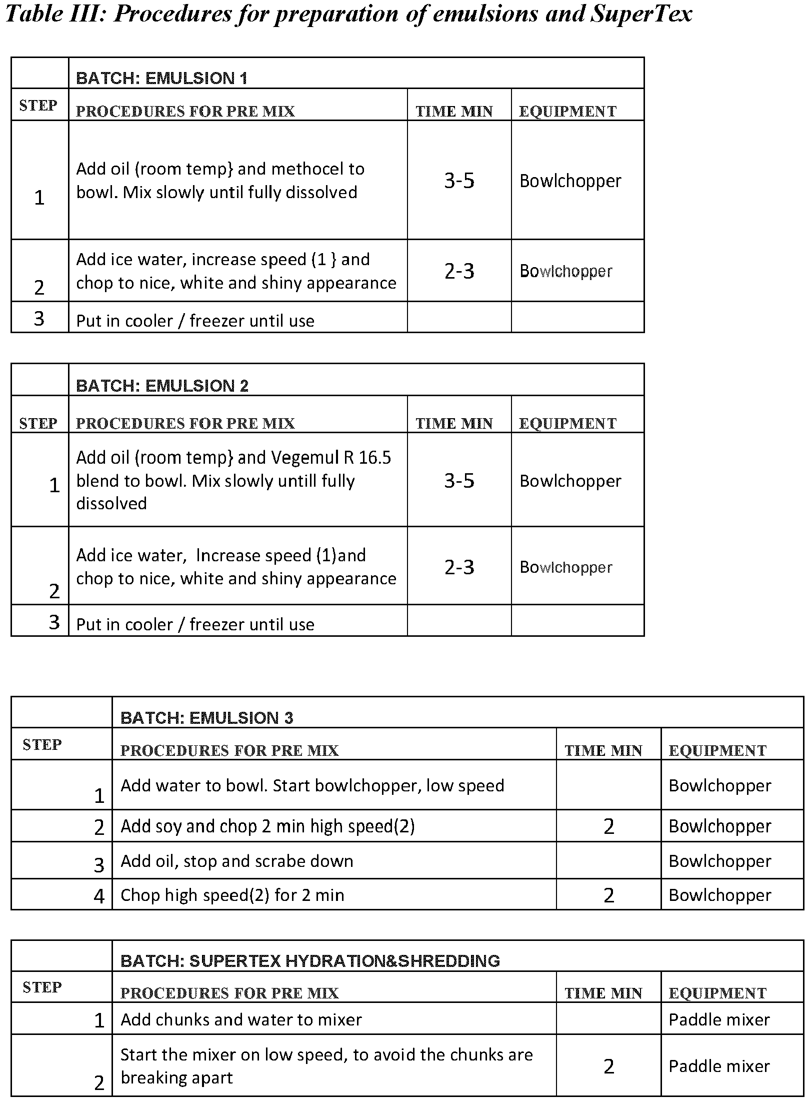

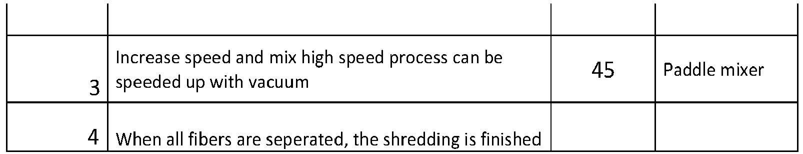

**Table IV: Detailed recipes**

| **Code** | **Ingredients** | **Fat** | **UM051.1.4** | | **UM051.1.5** | | **UM051.1.6** | | **UM051.1.7** | | **UM051.1.8** | |
|---|---|---|---|---|---|---|---|---|---|---|---|---|
| | | % | Batch | 50 | Batch | 50 | Batch | 50 | Batch | 50 | Batch | 50 |
| | | | Kg | % | Kg | % | Kg | % | Kg | % | Kg | % |
| I_09 | Water 1(EM) | | **11.350** | 22.700 | **20.000** | 39.999 | **25.000** | 50.000 | **15.000** | 30.000 | **9.500** | 19.000 |
| I_10 | Hydration water | | | | | | | | **9.000** | 18.000 | **11.250** | 22.500 |
| I_107 | SuperTex(Solbar) | 8 | | | | | | | **3.000** | 6.000 | **3.750** | 7.500 |
| I_143 | TRUTEX RS 65(LIGHT) | 5 | | | **4.458** | 8.915 | **3.715** | 7.429 | | | | |
| I_156 | Arcon F_Soy_ADM | 2 | | | | | | | **3.000** | 6.000 | **3.500** | 7.000 |
| I_155 | Arcon SM_Soy_ADM | 3 | **6.500** | 13.000 | **5.795** | 1.590 | **4.829** | 9.658 | **3.000** | 6.000 | **3.500** | 7.000 |
| I_98 | Methocel SG A16M(EM) | | **0.500** | 1.000 | **0.446** | 0.892 | **0.371** | 0.743 | **1.000** | 2.000 | **0.950** | 1.900 |
| I_11 | Vacuum salt | | **0.400** | 0.800 | **0.357** | 0.713 | **0.297** | 0.594 | **0.300** | 0.600 | **0.300** | 0.600 |
| I_30 | Boullion 2 | | **0.500** | 1.000 | **0.446** | 0.892 | **0.371** | 0.743 | **0.500** | 1.000 | **0.500** | 1.000 |
| I_35 | Vegetable oil 100 | | | | | | | | **4.500** | 9.000 | **4.750** | 9.500 |
| | EMULSION 1(1:5:15) 24 | | | | **17.831** | 35.662 | | | | | | |
| | EMULSION 2(1:2:5) 25 | | **15.000** | 30.000 | | | **14.859** | 29.718 | | | | |
| | Shred 1(Superrex 1:3) 2 | | **15.000** | 30.000 | | | | | | | | |
| I_98 | Methocel SG A16M(2) | | | | | | | | **0.500** | 1.000 | **0.500** | 1.000 |
| I_09 | Water2 | | | | | | | | **9.400** | 18.800 | **10.700** | 21.400 |
| | Solanic 200 3 | | **0.500** | 1.000 | **0.446** | 0.892 | **0.371** | 0.743 | **0.500** | 1.000 | **0.500** | 1.000 |
| | Chicken flavor (Vivera) | | **0.250** | 0.500 | **0.223** | 0.446 | **0.186** | 0.371 | **0.250** | 0.500 | **0.250** | 0.500 |
| | Beefflavor | | | | | | | | **0.050** | 0.100 | **0.050** | 0.100 |
| | TOTAL | | **50.000** | 100.000 | **50.000** | 100.000 | **50.000** | 100.000 | **50.000** | 100.000 | **50.000** | 100.000 |
| NUTRITIONAL VALUES | | | % | | % | | % | | % | | % | |
| PROTEIN | | | 14.6 | | 14.0 | | 11.7 | | 12.0 | | 14.0 | |
| CARBOHYDRATES | | | 5.1 | | 7.2 | | 4.7 | | 7.5 | | 8.2 | |
| FAT | | | 8.5 | | 9.3 | | 8.1 | | 9.8 | | 10.5 | |
| MOISTURE | | | 69.9 | | 67.8 | | 74.1 | | 69.1 | | 65.4 | |

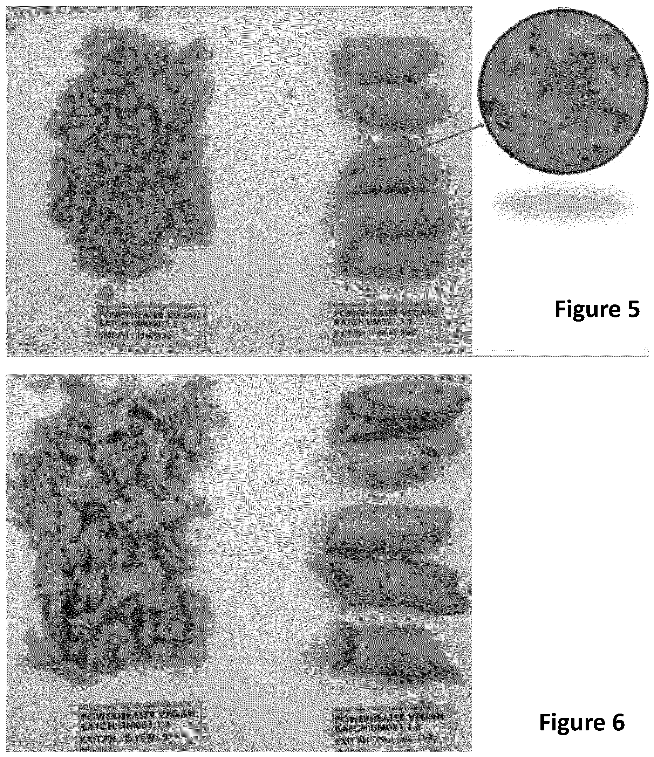

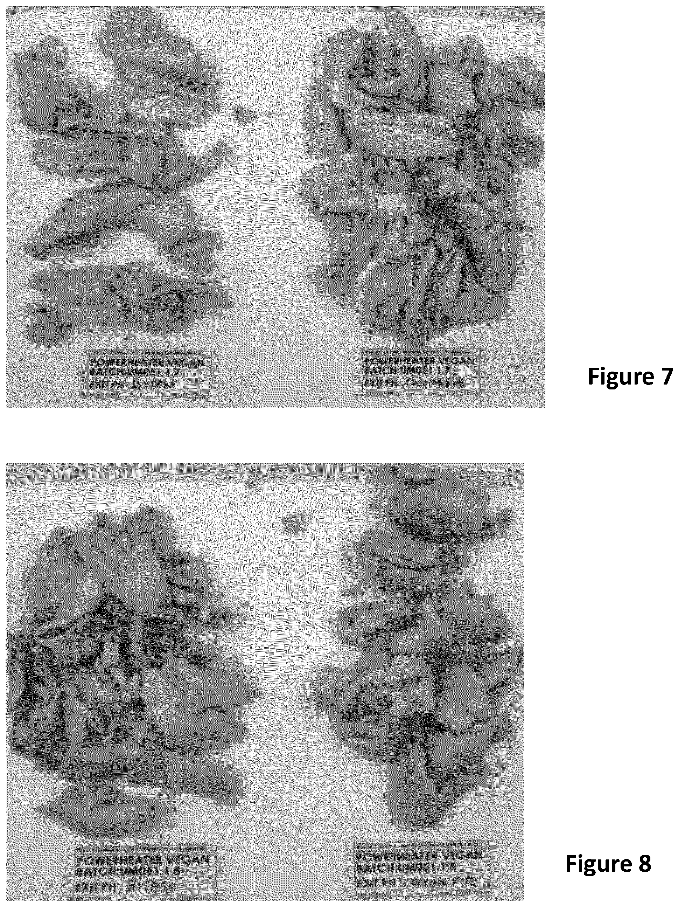

As can be seen in **Figures 5-8****,** showing samples of batches UM051.5-8, respectively, a meat analogue passing through a cooling pipe directly after exiting the HeatMaster possesses an improved texture and quality compared to the bypass without cooling. **Figures 5-8** show the bypass product to the left, while the picture on the right is after cooling pipe.

### Example 2B - Raw mix recipes STO36.1.1-3

Three different raw mix samples were prepared and processed with or without cooling pipe after HeatMaster. Cooling pipe samples were also cut.

| Source Technology equipment | | |
|---|---|---|
| Equipment | Equipment no | **Description/Configuration** |
| PowerHeater 100 | 105 | Screw 8 mmS |
| Flexicut | | 2 x cross knives |
| VEMAG HP20E type 163 | | |
| Kilia Bowlchopper | 69613714 | |
| Twinn paddle mixer | 1352 | |

| Application | Batch number | Description (functional ingredients) |
|---|---|---|
| Vegan chicken | ST036.1.1 | Emulsion (1:2:5), Unitex 1:1.2, Pea isolate, Gluten, Methocel, Carragenan, Konjac gum |
| Vegan chicken | ST036.1.2 | Emulsion (1:2:5), Unitex 1:1.2, Pea isolate, Gluten, Methocel, Carragenan |
| Vegan chicken | ST036.1.3 | Emulsion (1:2:5), Unitex 1:2.4, Pea isolate, Gluten, Methocel, Carragenan, Solanic. |

**RECIPES HYDRATION**

| File | **ST036.1.1-3** | | | | | | |
|---|---|---|---|---|---|---|---|
| | | | | **ST036.1.1 and ST036.1.2** | | **ST036.1.3** | |
| Code | Ingredients | Fat | | Hydration Unitex(1:1.2) | | Hydration Unitex(1:2.4) | |
| | | | | Batch | 31,2 | Batch | 26,5 |

| | | % | | Kg | % | Kg | % |
|---|---|---|---|---|---|---|---|
| I_187 | Unitex S-2020 Pea/Wheat TVP | 0 | | **14.366** | 46.045 | **7.950** | 30.000 |
| I_10 | Hydration water | | | **16.834** | 53.955 | **18.550** | 70.000 |
| | TOTAL | | | **31.200** | 100.000 | **26.500** | 100.000 |

| **NUTRITIONAL VALUES** | | | | % | | % | |
|---|---|---|---|---|---|---|---|
| PROTEIN | | | | 30.3 | | 19.7 | |
| CARBOHYDRATES | | | | 10.2 | | 6.6 | |
| FAT | | | | 0.1 | | 0.1 | |
| MOISTURE | | | | 59.4 | | 73.6 | |

**RECIPES**

| File | **ST036.1.1-3** | | | | | | | |
|---|---|---|---|---|---|---|---|---|
| Code | Ingredients | Fat | ST036.1.1 | | ST036.1.2 | | ST036.1.3 | |
| | | | Batch | 50 | Batch | 50 | Batch | 50 |

| | | % | Kg | % | Kg | % | Kg | % |
|---|---|---|---|---|---|---|---|---|
| I_214 | Unitex S-2020(Hydr.1:1.2) | 0 | **13.491** | 26.982 | **17.700** | 35.399 | | |
| I_185 | Methocel A4M(Emulsion) | | **1.400** | 2.800 | **0.950** | 1.900 | **1.250** | 2.500 |
| I_216 | Ice(Emulsion) | | **8.856** | 17.711 | **10.000** | 20.000 | **6.300** | 12.600 |
| I_35 | Vegetable oil | 100 | **4.223** | 8.446 | **4.750** | 9.500 | **4.000** | 8.000 |
| I_09 | Water/ice(50/50) | | **10.686** | 21.371 | **8.000** | 16.000 | **3.000** | 6.000 |
| I_21 | Pea Protein Isolate | 2 | **3.033** | 6.066 | | | **1.500** | 3.000 |
| I_17 | Wheat Gluten | 2 | **3.458** | 6.916 | **4.000** | 8.000 | **2.500** | 5.000 |
| I_123 | Methocel A4M(DRY) | | **0.500** | 1.000 | **0.500** | 1.000 | **0.500** | 1.000 |
| I_222 | Konjac Gum | | **0.500** | 1.000 | | | | |
| I_30 | Natural Flavour Chicken | 2 | **1.554** | 3.107 | **0.850** | 1.700 | **1.200** | 2.400 |
| I_94 | White pepper, solina 91124022 | 3 | | | **0.057** | 0.114 | | |
| I_190 | Onion Powder | 1 | | | **0.057** | 0.114 | | |
| I_95 | Garlic granulated, Solina91124014 | 1 | | | **0.057** | 0.114 | | |
| I_11 | Salt | | | | **0.100** | 0.200 | **0.250** | 0.500 |
| I_178 | Yeast extract Light YE 20540435 | 0 | | | **0.130** | 0.260 | | |
| I_111 | Titanium Dioxide, Solina 27520201 | | | | **0.350** | 0.700 | | |
| I_218 | Vinegar | | **1.050** | 2.100 | | | | |
| I_27 | Potato starch native | 0 | **0.250** | 0.500 | **1.500** | 3.000 | **1.500** | 3.000 |
| I_179 | Carrageenan E407 Solina 22531063 | | **1.000** | 2.000 | **1.000** | 2.000 | **1.000** | 2.000 |
| I_99 | Potato Protein Solanic 200 | 1 | | | | | **0.500** | 1.000 |
| I_219 | Unitex S-2020(Hydr.1:2.4) | 1 | | | | | **26.500** | 53.000 |
| TOTAL | | | **50.000** | 100.000 | **50.000** | 100.000 | **50.000** | 100.000 |
| | | | | | | | | |

| **NUTRITIONAL VALUES** | | | % | | % | | % | |
|---|---|---|---|---|---|---|---|---|
| PROTEIN | | | 19.7 | | 17.7 | | 16.1 | |
| CARBOHYDRATES | | | 9.2 | | 9.7 | | 10.5 | |
| FAT | | | 8.8 | | 9.7 | | 8.6 | |
| MOISTURE | | | 59.7 | | 60.4 | | 61.4 | |

**PROCEDURE & RESULT (ST036.1.1)**

| **STEP** | **PROCEDURES FOR PRE MIX** | **TIME MIN** | **EQUIPMENT** |
|---|---|---|---|
| | 1.Combine Unitex+water in steel bin | | |
| | 2. Mix by hand 2 min. | 5 | |
| 1 | 3. Leave to hydrate 5min. | | |
| 2 | Disperse methylcellulose in oil | 2 | Bowl cutter |
| 3 | Add ice-chop high speed | 2 | Bowl cutte |
| 4 | Scrape sides and lid | | |
| 5 | Add remaining ingredients, except hydrated unitex-chop high speed | 2 | Bowl cutter |
| 6 | Add hydrated unitex-mix 2 min with blades going in reverse | 2 | Bowl cutter |
| 7 | Chop low speed i round | | Bowl cutter |
| 8 | Unload Pre mix to filler | | Vemag |

| | | | | SUMMARY |
|---|---|---|---|---|
| **POWERHEATER SETTINGS** | SUB TEST#1 | SUB TEST#2 | SUB TEST# | Samples from bypass are more soft/loose, compared to samples taken after cooling pipe- after cooling pipe the product is more firm and has a good fibrous texture, this results in an improved cutting of the products. |
| FINAL MIX TEMP(°C) | 15.1 | 15.1 | | |
| PUMP SPEED(%) | 5 | 5 | | |
| SCREW HEIGHT(MM) | 8 | 8 | | |
| SCREW SINGLE/DOUBLE FLIGHTS(S/D) | S | S | | |
| POWERHEATER PRESSURE(BAR) | 8.7 | 8.7 | | |
| POWERHEATER SCREW SPEED(%) | 50 | 50 | | Temperature measurements after |
| POWERHEATER EXIT TEMP(°C) | 85.0 | 85.0 | | cooling pipe: |
| POWERHEATER CAPACITY(KG/HOUR) | 192.0 | 192.0 | | Surface temperature: 37°C |
| FLEXICUT KNIFE SETTINGS | Bypass | Cooling pipe | | Core temperature: 44°C |
| CPM: Cut per minute | | | | |
| 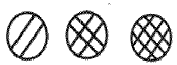 | | | | |

**PROCEDURE & RESULT (ST036.1.2)**

| **STEP** | **PROCEDURES FOR PRE MIX** | **TIME MIN** | **EQUIPMENT** |
|---|---|---|---|
| 1 | | 7 | |
| | 1.Combine Unitex+water in steel bin | | |
| | 2. Mix by hand 2 min. | | |
| | 3. Leave to hydrate 5min. | | |
| 2 | Disperse Methocel in oil, reverse knives(Speed 2) | 2 | Bowl cutter |
| 3 | Add ice, chop high speed | 2 | Bowl cutter |
| 4 | Add all dry(except Wheat gluten and Potato starch)+remaining Ice water(50% ice). Chop high speed | 2 | Bowl cutter |
| 5 | Mix in the hydrated Unitex. Reverse knives/forward knives mixing speed 2, on till homogen app. | 2-3 | Bowl cutter |
| 6 | | 2-3 | Bowl cutter |
| | Add Wheat gluten and Potato starch. Reverse knives/forward knives mixing speed 2, on till homogen app. | | |
| 7 | Unload Pre mix to filler | | Vemag |

| **POWERHEATER SETTINGS** | | | SUMMARY |
|---|---|---|---|
| | SUB TEST#1 | SUB TEST#2 | Samples from bypass are more |
| FINAL MIX TEMP(°C) | 13.4 | 13.4 | soft/loose, compared to samples taken after cooling pipe- after cooling pipe the product is more firm and has a good fibrous texture; this results in an improved cutting of the products. The colour of the product is a bit to white, this can be adjusted by e.g. lowering amount of Titanium dioxide |
| PUMP SPEED(%) | 6 | 6 | |
| SCREW HEIGHT(MM) | 8 | 8 | |
| SCREW SINGLE/DOUBLE FLIGHTS(S/D) | S | S | |
| POWERHEATER PRESSURE(BAR) | 12.7 | 12.7 | |
| POWERHEATER SCREW SPEED(%) | 35 | 35 | |
| POWERHEATER EXIT TEMP(°C) | 86.0 | 86.0 | |
| POWERHEATER CAPACITY(KG/HOUR) | 258.0 | 258.0 | |
| FLEXICUT KNIFE SETTINGS | | | Temperature measurements after |
| CPM: Cut per minute | | | cooling pipe: |
| 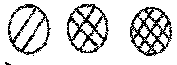 | | | Surface temperature: 38°C |
| | | | Core temperature: 45°C |
| | Bypass | Cooling pipe | |

**PROCEDURE & RESULT (ST036.1.3)**

| **STEP** | **PROCEDURES FOR PRE MIX** | **TIME MIN** | **EQUIPMENT** |
|---|---|---|---|
| | | 5 | N&N paddle mixer |
| | 1.Combine Unitex+water+crunched ice+50% flavour pack in paddle mixer | | |
| 1 | 2. Mix for 5 mins on low speed with full vaccum. | | |
| 2 | Dissolved Methocel in oil, reverse knives(Speed 2) | 2 | Bowl cutter |
| 3 | Add ice, chop high speed | 2 | Bowl cutter |
| 4 | | 2 | Bowl cutter |
| | Add all dry(except Carregenan, Potato starch and protein)+remaining water. Chop high speed | | |
| 5 | Mix in the hydrated Unitex. Reverse knives/forward knives mixing speed 2, ontill homogen app. | 2-4 | Bowl cutter |
| 6 | Add Carregenan, Potato starch and protein. Reverse knives/forward knives mixing speed 2, ontill homogen app. | 2-3 | Bowl cutter |
| 7 | Unload Pre mix to filler | | Vemag |

| | | | SUMMARY |
|---|---|---|---|
| **POWERHEATER SETTINGS** | SUB TEST#1 | SUB TEST#2 | Samples from bypass is more soft/loose, compared to samples taken after cooling pipe- after cooling pipe the product is more firm and have an good fibrous texture, this results in a improved cutting of the products. |
| FINAL MIX TEMP(°C) | 12.3 | 12.3 | |
| PUMP SPEED(%) | 5 | 5 | |
| SCREW HEIGHT(MM) | 8 | 8 | |
| SCREW SINGLE/DOUBLE FLIGHTS(S/D) | S | S | |
| POWERHEATER PRESSURE(BAR) | 12.7 | 12.7 | |
| POWERHEATER SCREW SPEED(%) | 40 | 40 | Temperature measurements after cooling |
| POWERHEATER EXIT TEMP(°C) POWERHEATER CAPACITY(KG/HOUR) FLEXICUT KNIFE SETTINGS CPM: Cut per minute | 95.0 | 95.0 | pipe: Surface |
| | 182.0 | 182.0 | temperature: 42°C |
| | | | Core temperature: 48°C |
| 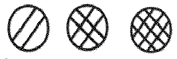 | Bypass | Cooling pipe | |

### Results and conclusions:

Preparation of the mixtures *ST36.1-3* started with preparation of different emulsions and hydration/shredding of textured proteins.

The raw mix for all 3 tests was prepared from start to end, in a bowlchopper, as earlier tests have indicated that this may improve the final result, as e.g. Methocel can be activated in a satisfactory way.

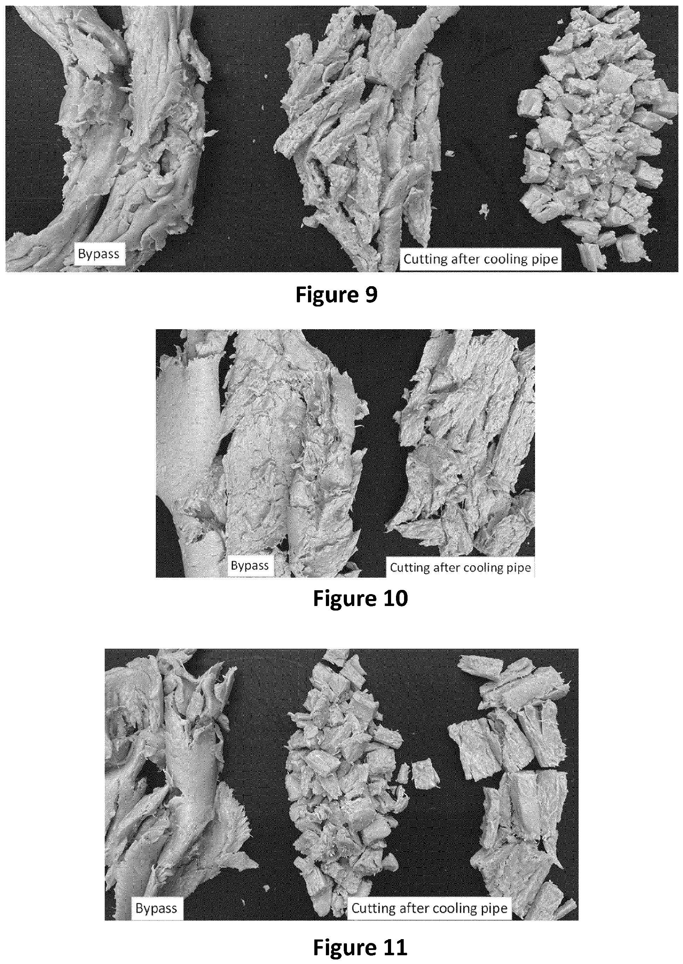

The results show an overall improvement to the products passing through the cooling pipe after the PowerHeater as compared to the bypass with respect to structure, such as firmness, thereby making it more suitable for cutting. The results are illustrated in **Figures 9-11****,** showing samples +/- cooling pipe. The bypass was not cut, as it is generally less suitable for cutting (not shown). Cooling pipe samples were cut into stripes and mints (mints not shown for sample 36.1.2).

### Example 2C - Raw mix recipes STO37.1-2)

Two very different meat analogue samples (vegan beef and vegan chicken) were processed and subjected to cutting after HeatMaster directly (bypass) or after cooling through a cooling pipe.

| Equipment | Equipment no | Description/Configuration |
|---|---|---|
| PowerHeater 100 | 105 | Screw 8 mmS |
| Flexicut | | 2 x cross knives |
| VEMAG HP20E type 163 | | |
| Kilia Bowlchopper | 69613714 | |
| Twinn paddle mixer | 1352 | |

| **Application** | **Batch number** | **Description** (**functional ingredients)** |
|---|---|---|
| Vegan chicken | ST037.1.1 | Emulsion (1:2:5), Textura soy 1:3, Soy isolate, Methocel, Carragenan, Solanic |
| Vegan beef | ST037.1.2 | Emulsion (1:2:5), Textura soy 1:3, Soy isolate, Solanic |

**RECIPE (ST037.1.1 Vegan Chicken)**

| Code | Ingredients | Fat | ST037.1.1 | | Hydration | |
|---|---|---|---|---|---|---|
| | | | Batch | 50 | Batch | 11.15 |
| | | % | Kg | % | Kg | % |
| I_09 | Water/lce(50/50) | | **13.450** | 26.900 | | |
| I_10 | Hydration water | | | | **8.363** | 75.000 |
| 1_I57 | Textura_595800_Soy_ADM | 3 | | | **2.788** | 25.000 |
| I_220 | Hydrated Textura-595800(1:3) | 1 | **11.150** | 22.300 | | |
| I_155 | Arcon SM_Soy_ADM | 3 | | | | |
| I_154 | Profam 974_ Soy_ ADM | 4 | **6.000** | 12.000 | | |
| I_35 | Vegetable oil | 100 | **4.750** | 9.500 | | |
| I_11 | Salt | | **0.450** | 0.900 | | |
| I_36 | Dextrose | | **0.200** | 0.400 | | |
| | Natural Flavour Chicken | 2 | **0.500** | 1.000 | | |
| I_99 | Potato Protein Solanic 200 | 1 | **1.000** | 2.000 | | |
| I_185 | Methocel A4M(Emulsion) | | **1.000** | 2.000 | | |
| I_185 | Methocel A4M(DRY ADDITION) | | **0.500** | 1.000 | | |
| I_09 | Ice | | **10.000** | 20.000 | | |
| I_179 | Carrageenan E407 | | **1.000** | 2.000 | | |
| TOTAL | | | **50.000** | 100.000 | **11.150** | 100.000 |

| **NUTRITIONAL VALUES** | | | % | | % | |
|---|---|---|---|---|---|---|
| PROTEIN | | | | | 15.0 | |
| CARBOHYDRATES | | | 15.5 | | 6.8 | |
| FAT | | | 4.2 | | 0.8 | |
| MOISTURE | | | 10.2 | | 76.3 | |

**PROCEDURE & RESULT (ST037.1.1 Vegan Chicken)**

| **STEP** | **PROCEDURES FOR PRE MIX** | **TIME MIN** | **EQUIPMENT** |
|---|---|---|---|
| 1 | Hydrate and shred Textura(open fibers) with hydration water in mixer(High speed) | 60 | Paddle mixer |
| 2 | Dissolved Methocel in oil, reverse knives(Speed 2) | 2 | Bowl cutter |
| 3 | Add ice, chop high speed | 2 | Bowl cutter |
| 4 | Add all dry(incl. soy powder)+Ice/water(50% ice). Chop high speed | 1 | Bowl cutter |
| 5 | Mix in the shredded/hydrated Textura. Reverse knives/forward knives mixing speed 2, ontill homogen app. | 2-3 | Bowl cutter |
| 6 | Unload Pre mix to filler | | Vemag |
| 7 | Ready for PH/Flexicut process | | PH/FlexiCut |

| | | | | SUMMARY |
|---|---|---|---|---|
| **POWERHEATER SETTINGS** | SUB TEST#1 | SUB TEST#2 | SUB TEST#3 | Samples from bypass are more soft/loose, compared to samples taken after cooling pipe. When cutting without cooling, there are more fines and breakage of the product during cutting, furthermore the surface on the trips is more rough and irregular. When going through the cooling pipe the product is more firm and has a good fibrous texture, this results in an improved cutting of the product. |
| FINAL MIX TEMP(°C) PUMP SPEED(%) SCREW HEIGHT(MM) SCREW SINGLE/DOUBLE FLIGHTS(S/D) POWERHEATER PRESSURE(BAR) | 4.1 | 4.1 | 4.1 | |
| | 7 | 7 | 7 | |
| | 8 | 8 | 8 | |
| | S | S | S | |
| | 7.4 | 7.4 | 7.4 | |
| POWERHEATER SCREW SPEED(%) | 50 | 50 | 50 | |
| POWERHEATER EXIT TEMP(°C) | 85.0 | 85.0 | 85.0 | |
| POWERHEATER CAPACITY(KG/HOUR) | 207.0 | 205.0 | 205.0 | Temperature measurements after cooling |
| FLEXICUT KNIFE SETTINGS | | | | pipe: |
| CPM: Cut per minute | | | | Surface temperature: 41°C |
| 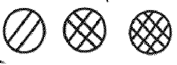 | Bypass | No Cooling pipe | With Cooling pipe | Core temperature: 49°C |

**RECIPE (ST037.1.2 Vegan Beef)**

| Code | Ingredients | Fat | ST037.1.2 | | Hydration | | SOYEMULSION | |
|---|---|---|---|---|---|---|---|---|
| | | | Batch | 50 | Batch | 30.775 | Batch | 13 |
| | | % | Kg | % | Kg | % | Kg | % |
| I_09 | Water | | | | | | **8.125** | 62.500 |
| I_10 | Hydration water | | | | **23.081** | 75.000 | | |
| 1_I57 | Textura_595800_Soy_ ADM | 3 | | | **7.694** | 25.000 | | |
| I_220 | Hydrated Textura-595800(1:3) | 1 | **30.775** | 61.550 | | | | |
| I_188 | SOY Emulsion 1:2:5 | 25 | **13.000** | 26.000 | | | | |
| I_155 | Arcon SM_Soy_ADM | 3 | | | | | | |
| I_154 | Profam 974_ Soy_ ADM | 4 | **2.000** | 4.000 | | | **1.625** | 12.500 |
| I_35 | Vegetable oil | 100 | | | | | **3.250** | 25.000 |
| I_11 | Salt | | **0.375** | 0.750 | | | | |
| I_36 | Dextrose | | **0.200** | 0.400 | | | | |
| I_138 | Beef TQ-305-688-3_Givaudan | 7 | **0.400** | 0.800 | | | | |
| I_99 | Potato Protein Solanic 200 | 1 | **3.000** | 6.000 | | | | |
| I_37 | Malt colour | | **0.250** | 0.500 | | | | |
| TOTAL | | | **50.000** | 100.000 | **30.775** | 100.000 | **13.000** | 100.000 |
| | | | | | | | | |

| **NUTRITIONAL VALUES** | | | % | | % | | % | |
|---|---|---|---|---|---|---|---|---|
| PROTEIN | | | 20.2 | | 15.0 | | 10.6 | |
| CARBOHYDRATES | | | 6.0 | | 6.8 | | 0.1 | |
| FAT | | | 7.3 | | 0.8 | | 25.5 | |
| MOISTURE | | | 64.4 | | 76.3 | | 63.1 | |

**PROCEDURE & RESULT (ST037.1.2 Vegan Beef)**

| **STEP** | **PROCEDURES FOR PRE MIX** | **TIME MIN** | **EQUIPMENT** |
|---|---|---|---|
| 1 | Hydrate and shred Textura(open fibers) with hydration water in mixer(High speed) | 60 | Paddle mixer |
| 2 | Prepare soy emulsion(high speed): 1)Chop soy protein with water 2 min 2) Add oil and chop 2 min | 4 | Bowlchopper |
| 3 | Mix hydrate texura with emulsion and colour, reverse knives | 2 | Bowlchopper |
| 4 | Add all remaining ingredients and mix reverse knives | 3 | Bowlchopper |
| 5 | Unload Pre mix to filler | | Vemag |
| 6 | Ready for PH/Flexicut process | | PH/FlexiCut |

| **POWERHEATER SETTINGS** | | | |
|---|---|---|---|
| | SUB TEST#1 | SUB TEST#2 | SUB TEST#3 |
| FINAL MIX TEMP(°C) | 28.7 | 28.7 | 28.7 |
| PUMP SPEED(%) | 5 | 5 | 5 |
| SCREW HEIGHT(MM) | 8 | 8 | 8 |
| SCREW SINGLE/DOUBLE FLIGHTS(S/D) | S | S | S |
| POWERHEATER PRESSURE(BAR) | 11.5 | 11.5 | 11.5 |
| POWERHEATER SCREW SPEED(%) | 35 | 35 | 35 |
| POWERHEATER EXIT TEMP(°C) | 85.0 | 85.0 | 85.0 |
| POWERHEATER CAPACITY(KG/HOUR) | 182.0 | 181.0 | 180.0 |
| FLEXICUT KNIFE SETTINGS | | | |
| CPM: Cut per minute | | | |
| 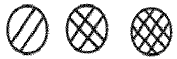 | | | |
| | Bypass | No Cooling pipe | With Cooling pipe |

Temperature measurements after cooling pipe: Surface: 41°C, Core: 47°C

Samples from bypass are more soft/loose, compared to samples taken after cooling pipe. When cutting without cooling, there are more fines and breakage of the product during cutting, furthermore the surface on the strips is more rough and irregular. When going through the cooling pipe the product is more firm and has a good fibrous texture, as well as an improved cuttability.

### Results & conclusion:

Similar to **Example 2A and B,** tests with vegan beef and vegan chicken recipes confirmed the positive results with the use of the cooling pipe..

Preparation of the mixtures started with preparation of different emulsions and hydration/shredding of textured proteins.

The raw mix for both tests was prepared from start to end in a bowlchopper.

Samples from different outputs were taken, with very different results.

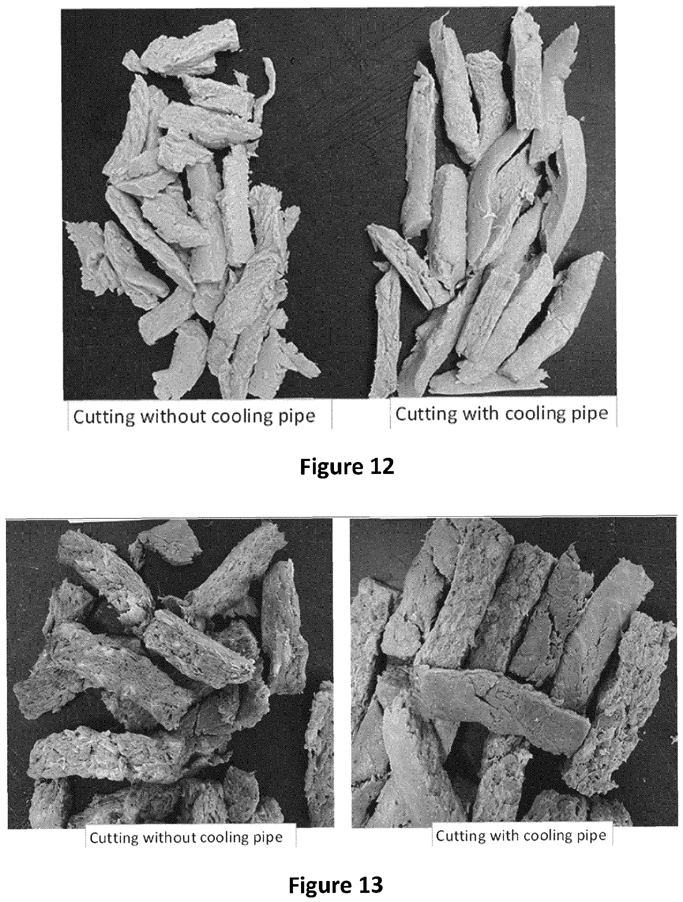

The results from both tests show an overall improvement to the products firmness after cooling, thereby making it better for cutting. This is illustrated in **Figures 12** and **13****,** showing e.g. a better texture and/or smoother surface. In contrast to earlier experiments, pictures are shown, where both bypass and products after cooling pipe are cut.

### Example 3 - Equipment used

Apart from standard laboratory equipment the following devices are used:VF50 vacuum filler (Handtmann), PowerHeater 100 (Source Technology), cooling pipe, Unicut 114 (Source Technology).

**Figure 1B** illustrates the experimental set-up used herein, with positioning of a processing device, cooling device and optional cutting device.

### Cooling pipe

The product provided by the PowerHeater, also referred to as the non-meat dough herein, is cooled by being transferred through a cooling device, such as a heat exchanger. In the experiments (see e.g. **Example 2**), a cooling pipe as illustrated in **Figure 2** is used. **Figure 3** provides dimensions and retention times in dependency of feeding capacity (flow rate) of the cooling device/pipe. The cooling pipe was cooled with cold water (around 4-8°C).

## Claims

1. A method for providing a meat analogue, said method comprising the steps of:
a. Providing a meat analogue raw mix;
b. Processing the raw mix from step (a) at process conditions comprising:
i. an overpressure of 1.0-25 bar; and
ii. a temperature of 70-125°C;
wherein said process conditions are adapted to provide a non-meat dough with an exit temperature of 65-110°C; and wherein the raw mix is subjected to a higher pressure at the start than at the end of the processing step (b);
c. Cooling the non-meat dough by the use of a cooling means or device to a temperature at least 10°C below said non-meat dough exit temperature to provide the meat analogue; and optionally
d. Providing smaller pieces of said meat analogue, such as slices, stripes, mints, chunks and/or cubes by cutting using a cutter.

2. A method according to claim 1, wherein the cooling time in (c) is around 0.1-2 min, 0.2-1.5 min, 0.3-1.0 min, 10-60 sec, 15-40 sec, or 20-30 sec.

3. A method according to any one of the preceding claims, wherein the cooling in step (c) is provided by the use of a cooling means or device adapted to provide a meat analogue exit temperature of at least 10, 20, 25, 30, 35, 40, 45, 50, 55, 60 or more than 60°C below said non-meat dough exit temperature in step (b).

4. A method according to any one of the preceding claims, wherein the cooling means or device in step (c) is adapted provided a temperature gradient of 2-20, 3-15, 4-12, 5-10, or 6-8°C measured between the core and the surface temperature of said meat analogue.

5. A method according to any one of the preceding claims, wherein the cooling means or device in step (c) is adapted to provide a surface and/or core temperature of 5-10°C, 10-20°C, 20-30°C, 30-40°C, 40-50°C, 50-60°C, or more than 60°C; or 30-65, 35-60, or 35-55°C below said non-meat dough exit temperature to provide the meat analogue.

6. A method according to any one of the preceding claims, wherein the cooling means or device in step (c) is a fluid-cooled cooling pipe with a length of 0.5-5, 0.8-2 or around 1 m, and/or a cooling pipe with an inner diameter of 10-60, 20-50 or 30-40mm surrounded by an outer cooling jacket.

7. A method according to any one of the preceding claims, wherein said process does not comprise an extrusion process, such as a classical extrusion process.

8. A method according to any one of the preceding claims, wherein said raw mix comprises a composition essentially as disclosed in any one of the Examples.

9. A method according to any one of the preceding claims, wherein the meat analogue is one or more of: vegan, gluten-free, and/or kosher, including any combination thereof.

10. A method according to any one of the preceding claims, wherein the meat analogue is a poultry (e.g. chicken or turkey), mammalian (e.g. beef or pork), reptile (e.g. snake or crocodile) or fish meat analogue.

11. A meat analogue obtained or obtainable by a method according to any one of the preceding claims, wherein
- the non-meat dough exit temperature is 70-100°C;
- the meat analogue exit temperature is at least 10 or 20°C lower than the non-meat dough exit temperature and/or 50-70°C; and
- said cooling time is 10-60 or 15-40 sec.

12. A system for providing a meat analogue from a meat analogue raw mix, said system comprising:
a. a processing device (20) for processing a meat analogue raw mix to provide a non-meat dough, said processing device comprising:
i. Propulsion means, such as an auger and/or pressure, to provide defined/controlled movement of the raw mix from a raw mix entry point (21) to a non-meat dough exit point (22);
ii. Pressure means for subjecting the raw mix to a defined/controlled overpressure, such as 1-25 bar;
iii. Heating means for heating the raw mix to a defined/controlled temperature, such as 70-125 °C; and
b. a cooling device (30), such as a heat exchanger, e.g. a cooling pipe, for rapid cooling of the non-meat dough by at least 5°C to provide the meat analogue; wherein said cooling device is in fluid connection with the food processing device.

13. A system according to claim 12, comprising a cutting device (40) for cutting the meat analogue into smaller pieces, slices, stripes, mints, chunks and/or cubes, such as a cutting device (40) adapted to cut to the meat analogue in a longitudinal and/or cross direction, and wherein the cooling device (30) is arranged between the processing device (20) and the cutting device (40).

14. A system according to claim 12 or 13, wherein said system is a continuous system.

15. A system according to any one of claims 12-14, wherein the processing device (20) does not comprise classical extrusion means.
